# EUROPEAN PATENT APPLICATION

(11) **EP 4 290 648 A1**
(43) Date of publication of application: **13.12.2023**
(21) Application number: 22920995.2
(22) Date of filing: 28.04.2022
(51) Int. Cl.: H01M 10/44

(54) **CHARGING CONTROL METHOD AND CHARGING CONTROL APPARATUS FOR BATTERY SYSTEM**

(71) Applicant: Contemporary Amperex Technology Co., Limited, Ningde City, Fujian 352100 (CN)
(72) Inventor: The designation of the inventor has not yet been filed
(74) Representative: Ziebig Hengelhaupt Intellectual Property Attorneys Patentanwaltskanzlei PartGmbB
(86) International application number: PCT/CN2022/090000
(87) International publication number: WO 2023/206266

(57) **Abstract**

Embodiments of this application provide a charging control method for battery system, and a charging control apparatus. The charging control method includes: under a condition that a battery with a smallest SOC in N batteries has been connected in parallel to the battery system, performing charging control on the battery system based on a difference between a SOC of a first battery not yet connected in parallel to the battery system and a SOC of a second battery already connected in parallel to the battery system; or under a condition that the battery with the smallest SOC in the N batteries has not been connected in parallel to the battery system, performing charging control on the battery system based on a difference between a voltage of a third battery and a voltage of a fourth battery. The charging control method and the charging control apparatus in the embodiments of this application facilitate improvement of safety of a battery system with a plurality of batteries connected in parallel.

## Description

### TECHNICAL FIELD

This application relates to the charging field, and more specifically, to a charging control method for battery system, and a charging control apparatus.

### BACKGROUND

At present, most battery systems in energy storage systems and electric vehicles use parallel connection of a plurality of batteries to meet the capacity and performance requirements of the energy storage systems and electric apparatuses. As the scale of the system increases and an increasing number of batteries are connected in parallel, current imbalance between the parallel-connected batteries may be caused due to differences of various parameters, and even generates loops in severe cases, affecting service life and performance of the energy storage system and leading to safety hazards.

Therefore, during charging of a battery system with a plurality of batteries connected in parallel, controlling a way that each battery is connected to the battery system is of great importance in resolving the above-mentioned safety hazards.

### SUMMARY

In view of this, embodiments of this application provide a charging control method for battery system, and a charging control apparatus, which are conducive to improving safety of a battery system with a plurality of batteries connected in parallel.

According to a first aspect, a charging control method for battery system is provided, and the battery system includes N batteries, N being a positive integer greater than 1. The charging control method includes: performing charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system, where the first battery is any one of the M batteries, and the second battery is a battery with a smallest SOC in the K batteries; or performing charging control on the battery system based on a difference between a voltage of a third battery in the M batteries and a voltage of a fourth battery in the K batteries, under a condition that the battery with the smallest SOC in the N batteries has not been connected in parallel to the battery system, where the third battery is any one of the M batteries and the fourth battery is a battery with a smallest voltage in the K batteries; where both M and K are positive integers and N=M+K.

In this embodiment, under the condition that the battery with the smallest SOC in the N batteries has been connected in parallel to the battery system, charging control is performed on the battery system based on a SOC difference between the battery not yet connected in parallel to the battery system and the battery with the smallest SOC that is already connected in parallel to the battery system; or under the condition that the battery with the smallest SOC in the N parallel-connected batteries has not been connected in parallel to the battery system, charging control is performed on the battery system based on a voltage difference between the battery not yet connected in parallel to the battery system and the battery with the smallest voltage connected in parallel to the battery system. In this embodiment of this application, different charging control strategies are used based on whether the battery with the smallest SOC in the N parallel-connected batteries has been connected in parallel to the battery system, which is conducive to avoiding current imbalance caused by differences in battery voltage, internal resistance, self-discharge rate, and other parameters among batteries during charging of a battery system with a plurality of batteries connected in parallel. This helps improve service life and performance of the battery system.

In addition, as compared with the technical solution that charging control is performed on the battery system only based on a voltage difference between batteries not yet connected in parallel to the battery system and batteries already connected in parallel to the battery system, in this embodiment of this application, charging control is performed on the battery system also based on a SOC difference between the batteries not yet connected in parallel to the battery system and the batteries already connected in parallel to the battery system. This can be better applied to batteries having open circuit voltage (open circuit voltage, OCV) with a relatively wide voltage plateau range (where a SOC of a cell with such voltage plateau range changes significantly but a voltage does not), for example, lithium iron phosphate batteries.

In a possible implementation, the performing charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system includes: determining, based on the difference between the SOC of the first battery and the SOC of the second battery, whether to connect the first battery in parallel to the battery system, under the condition that the battery with the smallest SOC in the N batteries has been connected in parallel to the battery system; or the performing charging control on the battery system based on a difference between a voltage of a third battery in the M batteries and a voltage of a fourth battery in the K batteries, under a condition that the battery with the smallest SOC in the N batteries has not been connected in parallel to the battery system includes: determining, based on the difference between the voltage of the third battery and the voltage of the fourth battery, whether to connect the third battery in parallel to the battery system, under the condition that the battery with the smallest SOC in the N batteries has not been connected in parallel to the battery system.

In this embodiment, under the condition that the battery with the smallest SOC in the N batteries has been connected in parallel to the battery system, whether a battery not yet connected in parallel to the battery system is to be connected in parallel to the battery system is determined based on a SOC difference between the battery not yet connected in parallel to the battery system and the battery with the smallest SOC that is already connected in parallel to the battery system; or under the condition that the battery with the smallest SOC in the N batteries has not been connected in parallel to the battery system, whether a battery not yet connected in parallel to the battery system is to be connected in parallel to the battery system is determined based on a voltage difference between the battery not yet connected in parallel to the battery system and the battery with the smallest voltage connected in parallel to the battery system. In this embodiment of this application, different charging control strategies are used based on whether the battery with the smallest SOC in the N batteries has been connected in parallel to the battery system, which can avoid current imbalance caused by differences in battery voltage, internal resistance, self-discharge rate, and other parameters among batteries during charging of a battery system with a plurality of batteries connected in parallel, thereby improving service life and performance of the battery system.

In a possible implementation, the charging control method is applied to the battery system that has not been applied with high voltage, and the charging control method further includes: under a condition that a battery with a smallest voltage in the N batteries has been connected in parallel to the battery system, determining whether the battery with the smallest SOC in the N parallel-connected batteries has been connected in parallel to the battery system.

In this embodiment, under the condition that the battery with the smallest voltage in the N batteries has been connected in parallel to the battery system, it is determined whether the battery with the smallest SOC in the N batteries has been connected in parallel to the battery system. In this way, under a condition that a voltage is not symmetrical to a SOC (that is, the battery with the smallest voltage is not the battery with the smallest SOC), a battery with a voltage lower than that of the battery with the smallest voltage in the batteries already connected in parallel to the battery system can be prevented from not being able to connect in parallel to the battery system due to missing an occasion of parallel connection to the battery system, thereby improving the charging efficiency.

In a possible implementation, the determining, based on the difference between the SOC of the first battery and the SOC of the second battery, whether to control the first battery to connect in parallel to the battery system, under the condition that the battery with the smallest SOC in the N batteries has been connected in parallel to the battery system includes: determining whether the difference between the SOC of the first battery and the SOC of the second battery is greater than a first threshold, under the condition that the battery with the smallest SOC in the N batteries has been connected in parallel to the battery system; and determining, based on a difference between a voltage of the first battery and the voltage of the fourth battery, whether to connect the first battery in parallel to the battery system, under a condition that the difference between the SOC of the first battery and the SOC of the second battery is not greater than the first threshold.

In this embodiment, under the condition that the battery with the smallest SOC in the N batteries has been connected in parallel to the battery system and the difference between the SOC of the first battery and the SOC of the second battery is greater than the first threshold, whether to control the first battery to be connected in parallel to the battery system is determined based on the difference between the voltage of the first battery and the voltage of the battery with the smallest voltage and already connected in parallel to the battery system. This helps avoid sticking, shortened service life, or damage to cells caused by impact of loops on a relay due to an excessively large voltage difference during parallel connection of the batteries to the battery system.

In a possible implementation, the determining, based on a difference between a voltage of the first battery and the voltage of the fourth battery, whether to connect the first battery in parallel to the battery system, under a condition that the difference between the SOC of the first battery and the SOC of the second battery is not greater than the first threshold includes: under the condition that the difference between the SOC of the first battery and the SOC of the second battery is not greater than the first threshold, determining whether the difference between the voltage of the first battery and the voltage of the fourth battery is greater than a second threshold; and under a condition that the difference between the voltage of the first battery and the voltage of the fourth battery is not greater than the second threshold, determining to connect the first battery in parallel to the battery system.

In this embodiment, it is determined to connect the first battery in parallel to the battery system only under the condition that the difference between the SOC of the first battery and the SOC of the second battery is not greater than the first threshold and the voltage difference between the first battery and the fourth battery is not greater than the second threshold. For the problem of asymmetry between the SOC and the voltage, both the SOC difference and the voltage difference are considered. This can avoid sticking, shortened service life, or damage to cells caused by impact of loops on a relay due to an excessively large voltage difference during parallel connection of the batteries to the battery system.

In a possible implementation, the determining, based on a difference between a voltage of the first battery and the voltage of the fourth battery, whether to connect the first battery in parallel to the battery system, under a condition that the difference between the SOC of the first battery and the SOC of the second battery is not greater than the first threshold includes: under the condition that the difference between the SOC of the first battery and the SOC of the second battery is not greater than the first threshold, determining whether the difference between the voltage of the first battery and the voltage of the fourth battery is greater than a second threshold; and under a condition that the difference between the voltage of the first battery and the voltage of the fourth battery is greater than the second threshold, determining not to connect the first battery in parallel to the battery system.

In this embodiment, under the condition that the difference between the SOC of the first battery and the SOC of the second battery is not greater than the first threshold, if the voltage difference between the first battery and the fourth battery is greater than the second threshold, it is determined not to connect the first battery in parallel to the battery system. This can avoid the problem of sticking, shortened service life, or damage to cells caused by impact of loops on a relay during incorporation of batteries due to an excessively large voltage difference from switched-on batteries.

In a possible implementation, the determining, based on the difference between the SOC of the first battery and the SOC of the second battery, whether to connect the first battery in parallel to the battery system, under the condition that the battery with the smallest SOC in the N parallel-connected batteries has been connected in parallel to the battery system further includes: under the condition that the battery with the smallest SOC in the N batteries has been connected in parallel to the battery system, determining whether the difference between the SOC of the first battery and the SOC of the second battery is greater than a first threshold; and under a condition that the difference between the SOC of the first battery and the SOC of the second battery is greater than the first threshold, determining not to connect the first battery in parallel to the battery system.

In this embodiment, once the difference between the SOC of the first battery and the SOC of the second battery is greater than the first threshold, it is determined not to connect the first battery in parallel to the battery system. This can avoid the problem of sticking, shortened service life, or damage to cells caused by impact of loops on a relay during parallel connection of batteries to the battery system.

In a possible implementation, the first battery is a battery with a smallest SOC in the M batteries, and the performing charging control on the battery system further includes: under a condition that the difference between the SOC of the first battery and the SOC of the second battery is greater than the first threshold, determining not to connect (M-1) batteries of the M batteries other than the first battery in parallel to the battery system, where M is greater than 1.

In this embodiment, the SOC of the first battery with the smallest SOC in the M batteries not yet connected in parallel to the battery system is compared with the SOC of the second battery with the smallest SOC in the K batteries connected in parallel to the battery system. Once it is determined not to connect the first battery in parallel to the battery system, no further judgment may be made on other batteries, thereby reducing a judgment time prior to charging and helping improve the charging efficiency.

In a possible implementation, the determining, based on the difference between the voltage of the third battery in the M batteries and the voltage of the fourth battery, whether to connect the third battery in parallel to the battery system, under the condition that the battery with the smallest SOC in the N batteries has not been connected in parallel to the battery system includes: under the condition that the battery with the smallest SOC in the N batteries has not been connected in parallel to the battery system, determining whether the difference between the voltage of the third battery and the voltage of the fourth battery is greater than a second threshold; and under a condition that the difference between the voltage of the third battery and the voltage of the fourth battery is not greater than the second threshold, determining to connect the third battery in parallel to the battery system.

In this embodiment, under the condition that the battery with the smallest SOC has not been connected in parallel to the battery system, if the voltage difference between the third battery and the fourth battery is not greater than the second threshold, it is determined to connect the third battery in parallel to the battery system. This can avoid the problem of sticking, shortened service life, or damage to cells caused by impact of loops on a relay during incorporation of batteries due to an excessively large voltage difference from switched-on batteries, and can also improve charging efficiency by incorporating as many non-switched-on batteries to the battery system as possible for charging.

In a possible implementation, the determining, based on the difference between the voltage of the third battery in the M batteries and the voltage of the fourth battery, whether to connect the third battery in parallel to the battery system, under the condition that the battery with the smallest SOC in the N batteries has not been connected in parallel to the battery system includes: under the condition that the battery with the smallest SOC in the N batteries has not been connected in parallel to the battery system, determining whether the difference between the voltage of the third battery and the voltage of the fourth battery is greater than a second threshold; and under a condition that the difference between the voltage of the third battery and the voltage of the fourth battery is greater than the second threshold, determining not to connect the third battery in parallel to the battery system.

In this embodiment, under the condition that the battery with the smallest SOC has not been connected in parallel to the battery system, if the voltage difference between the third battery and the fourth battery is greater than the second threshold, it is determined not to connect the third battery in parallel to the battery system. This can avoid the problem of sticking, shortened service life, or damage to cells caused by impact of loops on a relay during incorporation of batteries due to an excessively large voltage difference from switched-on batteries.

In a possible implementation, the third battery is a battery with a smallest voltage in the M batteries, and the performing charging control on the battery system further includes: under the condition that the difference between the voltage of the third battery and the voltage of the fourth battery is greater than the second threshold, determining not to connect (M-1) batteries of the M batteries other than the third battery in parallel to the battery system, where M is greater than 1.

In this embodiment, the voltage of the third battery with the smallest voltage in the M batteries not yet connected in parallel to the battery system is compared with the voltage of the fourth battery with the smallest voltage in the K batteries connected in parallel to the battery system. Once it is determined not to connect the third battery in parallel to the battery system, no further judgment may be made on other batteries, thereby reducing a judgment time prior to charging and helping improve the charging efficiency.

In a possible implementation, the performing charging control on the battery system further includes: controlling the battery system to be applied with high voltage.

In this embodiment, because the M batteries not yet connected in parallel to the battery system do not meet a static switch-on condition, controlling the battery system to be applied with high voltage makes both the SOC and voltage of the K batteries change dynamically, which helps determining, during charging, an occasion of connecting the M batteries in parallel to the battery system. In this way, as many non-faulty batteries as possible can be incorporated into the battery system for charging, thereby improving the charging efficiency.

In a possible implementation, before it is determined whether the battery with the smallest SOC in the N batteries has been connected in parallel to the battery system, the charging control method further includes: determining whether a voltage of a fifth battery in L batteries, not yet connected in parallel to the battery system, of the N batteries is less than a voltage of a sixth battery in Q batteries already connected in parallel to the battery system; and determining, under a condition that the voltage of the fifth battery is less than the voltage of the sixth battery, whether to connect the fifth battery in parallel to the battery system; where the fifth battery is any one of the L batteries, the sixth battery is a battery with a smallest voltage in the Q batteries, L and Q are positive integers, and N=L+Q, L being greater than or equal to M.

In this embodiment, the battery with the smallest voltage in the N batteries is connected in parallel to the battery system as much as possible before determining of whether the battery with the smallest SOC in the N batteries has been connected in parallel to the battery system. In this way, a battery with a voltage lower than that of the battery with the smallest voltage in the batteries already connected in parallel to the battery system can be prevented from not being able to connect in parallel to the battery system due to missing an occasion of parallel connection to the battery system.

In a possible implementation, the determining, under a condition that the voltage of the fifth battery is less than the voltage of the sixth battery, whether to connect the fifth battery in parallel to the battery system includes: under the condition that the voltage of the fifth battery is less than the voltage of the sixth battery, determining whether the difference between the voltage of the fifth battery and the voltage of the sixth battery is greater than a second threshold; and under a condition that the difference between the voltage of the fifth battery and the voltage of the sixth battery is not greater than the second threshold, determining to connect the fifth battery in parallel to the battery system.

In this embodiment, when the battery with the smallest voltage in the N batteries is connected in parallel to the battery system, the difference from the voltage of the battery with the smallest voltage in the batteries already connected in parallel to the battery system is considered. This can avoid the problem of sticking, shortened service life, or damage to cells caused by impact of loops on a relay during incorporation of batteries due to an excessively large voltage difference from switched-on batteries.

In a possible implementation, the fifth battery is a battery with a smallest voltage in the L batteries.

In this embodiment, the voltage of the fifth battery with the smallest voltage in the L batteries not yet connected in parallel to the battery system is compared with the voltage of the sixth battery with the smallest voltage in the Q batteries already connected in parallel to the battery system. Once it is determined not to connect the fifth battery in parallel to the battery system, the battery with the smallest voltage in the N batteries may be considered to be already connected in parallel to the battery system; or once it is determined to connect the fifth battery in parallel to the battery system, it may be considered that in the case of parallel connection of the fifth battery to the battery system, the battery with the smallest voltage in the N batteries has been also connected in parallel to the battery system. In this case, no further judgment may be made on other batteries, thereby reducing a judgment time prior to charging and helping improve the charging efficiency.

In a possible implementation, the charging control method is applied to the battery system that has been applied with high voltage.

In this embodiment, during charging, different charging control strategies are used based on whether the battery with the smallest SOC in the N batteries has been connected in parallel to the battery system, which helps avoid current imbalance caused by differences in battery voltage, internal resistance, self-discharge rate, and other parameters among batteries during charging of a battery system with a plurality of batteries connected in parallel, thereby improving service life and performance of the battery system.

In a possible embodiment, the determining, based on the difference between the SOC of the first battery and the SOC of the second battery, whether to connect the first battery in parallel to the battery system, under the condition that the battery with the smallest SOC in the N batteries has been connected in parallel to the battery system includes: under the condition that the battery with the smallest SOC in the N batteries has been connected in parallel to the battery system, performing power-reduction control charging on the K batteries based on the difference between the SOC of the first battery and the SOC of the second battery; and under a condition that power-reduction control charging is performed on the K batteries, determining, based on a difference between a voltage of the K batteries and the voltage of the first battery, whether to connect the first battery in parallel to the battery system.

In this embodiment, under the condition that the battery with the smallest SOC in the N batteries has been connected in parallel to the battery system, power-reduction control charging is performed on the K batteries based on the difference between the SOC of the first battery and the SOC of the second battery; and in the case of the power-reduction control charging, it is then determined, based on the difference between the voltage of the K batteries and the voltage of the first battery, whether to connect the first battery in parallel to the battery system. This helps avoid problems such as severe shock, damage to the cells, or sticking relays due to an excessively large voltage difference, as well as proneness to charging overcurrent caused by loopss due to direct incorporation of batteries during high-current charging.

In a possible implementation, the determining, based on a difference between a voltage of the K batteries and the voltage of the first battery, whether to connect the first battery in parallel to the battery system, under the condition that power-reduction control charging is performed on the K batteries includes: under the condition that power-reduction control charging is performed on the K batteries, determining whether the difference between the voltage of the K batteries and the voltage of the first battery is greater than a second threshold; and under a condition that the difference between the voltage of the K batteries and the voltage of the first battery is not greater than the second threshold, determining to connect the first battery in parallel to the battery system.

In this embodiment, under the condition that power-reduction control charging is performed on the K batteries based on the difference between the SOC of the first battery and the SOC of the second battery, if the difference between the voltage of the K batteries and the voltage of the first battery is not greater than the second threshold, it is determined to connect the first battery in parallel to the battery system. This can avoid the problem of sticking, shortened service life, or damage to cells caused by impact of loops on a relay during incorporation of batteries due to an excessively large voltage difference from the battery already connected in parallel to the battery system, and also allows as many non-faulty batteries as possible to be connected in parallel to the battery system.

In a possible implementation, the determining, based on a difference between a voltage of the K batteries and the voltage of the first battery, whether to connect the first battery in parallel to the battery system, under the condition that power-reduction control charging is performed on the K batteries includes: under the condition that power-reduction control charging is performed on the K batteries, determining whether the difference between the voltage of the K batteries and the voltage of the first battery is greater than a second threshold; and under a condition that a difference of the voltage of the K batteries minus the voltage of the first battery is greater than the second threshold, determining not to connect the first battery in parallel to the battery system.

In this embodiment, under the condition that power-reduction control charging is performed on the K batteries based on the difference between the SOC of the first battery and the SOC of the second battery, if the difference of the voltage of the K batteries minus the voltage of the first battery is greater than the second threshold, it is determined not to connect the first battery in parallel to the battery system. This can avoid the problem of sticking, shortened service life, or damage to cells caused by impact of loops on a relay during incorporation of batteries due to an excessively large voltage difference from switched-on batteries.

In a possible implementation, the performing power-reduction control charging on the K batteries based on the difference between the SOC of the first battery and the SOC of the second battery includes: performing power-reduction control charging on the K batteries under a condition that the difference between the SOC of the first battery and the SOC of the second battery is not greater than a first threshold.

In this embodiment, if the SOC difference between the first battery and the second battery is not greater than the first threshold, the power-reduction control charging may be performed directly on the K batteries, which can reduce the risk of failure in parallel connection to the battery system even after successful request for current regulation due to voltage overcharging of the batteries already connected in parallel to the battery system.

In a possible implementation, the performing power-reduction control charging on the K batteries based on the difference between the SOC of the first battery and the SOC of the second battery includes: under a condition that the difference between the SOC of the first battery and the SOC of the second battery is greater than a first threshold, performing power-reduction control charging on the K batteries based on a difference between an open circuit voltage OCV corresponding to the voltage of the K batteries and the voltage of the first battery.

In this embodiment, under the condition that the difference between the SOC of the first battery and the SOC of the second battery is greater than the first threshold, power-reduction control charging is further performed on the K batteries based on the difference between the open circuit voltage corresponding to the voltage of the K batteries and the voltage of the first battery. This can avoid missing a switch-on occasion of batteries that have a larger SOC difference from the battery already connected in parallel to the battery system but have a smaller voltage difference.

In a possible implementation, the performing power-reduction control charging on the K batteries based on a difference between an open circuit voltage OCV corresponding to the voltage of the K batteries and the voltage of the first battery includes: performing power-reduction control charging on the K batteries under a condition that a difference of the open circuit voltage OCV minus the voltage of the first battery is greater than or equal to a third threshold.

In this embodiment, power-reduction control charging is performed on the K batteries under the condition that the difference of the open circuit voltage minus the voltage of the first battery is greater than or equal to the third threshold. This helps accurately control, based on the difference between an actual voltage of the battery already connected in parallel to the battery system and a voltage of the battery not yet connected in parallel to the battery system, a battery not yet connected in parallel to the battery system to be connected in parallel or not connected in parallel to the battery system. This can avoid the problem of sticking, shortened service life, or damage to cells caused by impact of loops on a relay during incorporation of batteries due to an excessively large voltage difference from switched-on batteries, and also allows as many non-faulty batteries as possible to be connected in parallel to the battery system.

In a possible implementation, the performing charging control on the battery system further includes: under the condition that power-reduction control charging is performed on the K batteries, determining whether a difference of the voltage of the first battery minus the voltage of the K batteries from is greater than the second threshold; and under a condition that the difference of the voltage of the first battery minus the voltage of the K batteries is greater than the second threshold, requesting to charge the K batteries based on a value in a charge current look-up table for the K batteries.

In this embodiment, a charging limit is released under the condition that the difference of the voltage of the first battery minus the voltage of the K batteries is greater than the second threshold. This can avoid the problem of inefficient charging caused by prolonged power-reduction control charging on the battery system.

In a possible implementation, the determining, based on a difference between a voltage of the K batteries and the voltage of the first battery, whether to connect the first battery in parallel to the battery system, under the condition that power-reduction control charging is performed on the K batteries includes: under the condition that power-reduction control charging is performed on the K batteries, determining whether a first sampling current of the K batteries is greater than a fourth threshold; and under a condition that the first sampling current of the K batteries is not greater than the fourth threshold, determining, based on the difference between the voltage of the K batteries and the voltage of the first battery, whether to connect the first battery in parallel to the battery system.

In this embodiment, under the condition that power-reduction control charging is performed on the K batteries, whether a current sampling current is greater than the fourth threshold may be first determined, and if the sampling current of the K batteries is not greater than the fourth threshold, access of the first battery can be directly controlled based on the difference between the voltage of the K batteries and the voltage of the first battery. This can prevent misjudgment during subsequent controlling of an access status of the first battery based on the difference between the voltage of the K batteries and the voltage of the first battery, where the misjudgment is caused by the phenomenon of false highs of the voltage of the batteries already connected in parallel to the battery system due to charging polarization.

In a possible implementation, the performing power-reduction control charging on the K batteries further includes: performing power-reduction control charging on the K batteries under a condition that a second sampling current of the K batteries is greater than the fourth threshold.

In this embodiment, power-reduction control charging is performed on the K batteries under the condition that the second sampling current of the K batteries is greater than the fourth threshold. This helps avoid problems such as severe shock, damage to the cells, or sticking relays due to an excessively large voltage difference, as well as proneness to charging overcurrent caused by loopss due to direct incorporation of batteries during high-current charging.

In a possible implementation, the voltage of the K batteries is a maximum voltage in K voltages of the K batteries.

In this embodiment, determining based on the maximum voltage of the K batteries is intended to prevent the batteries not connected in parallel to the battery system from missing the switch-on occasion because a voltage of a battery with a higher voltage in the batteries already connected in parallel to the battery system is charged to even higher to be greater than those of the batteries not connected in parallel to the battery system for more than the second threshold at the presence of loops and inconsistency between voltages of the batteries already connected in parallel to the battery system.

In a possible implementation, the determining, based on the difference between the voltage of the third battery in the M batteries and the voltage of the fourth battery, whether to connect the third battery in parallel to the battery system, under the condition that the battery with the smallest SOC in the N batteries has not been connected in parallel to the battery system includes: under the condition that the battery with the smallest SOC in the N batteries has not been connected in parallel to the battery system, performing power-reduction control charging on the K batteries based on the difference between the voltage of the third battery and the voltage of the fourth battery; and under the condition that power-reduction control charging is performed on the K batteries, determining, based on a difference between a voltage of the K batteries and the voltage of the third battery, whether to connect the third battery in parallel to the battery system.

In this embodiment, under the condition that the battery with the smallest SOC in the N batteries has not been connected in parallel to the battery system, power-reduction control charging is performed based on the voltage difference between the third battery and the fourth battery, and whether to connect the third battery in parallel to the battery system is further determined based on the difference between the voltage of K batteries and the voltage of the third battery. This helps avoid problems such as severe shock, damage to the cells, or sticking relays due to an excessively large voltage difference, as well as proneness to charging overcurrent caused by loopss due to direct incorporation of batteries during high-current charging.

In a possible implementation, the performing power-reduction control charging on the K batteries based on the difference between the voltage of the third battery and the voltage of the fourth battery includes: performing power-reduction control charging on the K batteries under a condition that the difference between the voltage of the third battery and the voltage of the fourth battery is within a predetermined range.

In this embodiment, power-reduction control charging is performed on the K batteries under the condition that the difference between the voltage of the third battery and the voltage of the fourth battery is within the predetermined range. This helps avoid problems such as severe shock, damage to the cells, or sticking relays due to an excessively large voltage difference, as well as proneness to charging overcurrent caused by loopss due to direct incorporation of batteries during high-current charging.

In a possible implementation, the determining, based on a difference between a voltage of the K batteries and the voltage of the third battery, whether to connect the third battery in parallel to the battery system includes: under a condition that the difference between the voltage of the third battery and the voltage of the fourth battery is within the predetermined range, determining to connect the third battery in parallel to the battery system.

In this embodiment, under the condition that the difference between the voltage of the third battery and the voltage of the fourth battery is within the predetermined range, it is determined to connect the third battery in parallel to the battery system. This can avoid problems such as severe shock, damage to the cells, or sticking relays due to an excessively large voltage difference.

In a possible implementation, the third battery is a battery with a smallest voltage in the M batteries.

In this embodiment, the voltage of the battery with the smallest voltage in the M batteries not yet connected in parallel to the battery system is compared with a low voltage of the battery with the smallest voltage in the K batteries already connected in parallel to the battery system. Once the battery with the smallest voltage in the M batteries cannot meet a switch-on condition, no further judgment is made on other non-switched-on batteries in sequence, and charging of the K batteries continues until a new occasion is found, thereby reducing complexity of algorithms.

According to a second aspect, a charging control apparatus for battery system is provided, and the battery system includes N batteries, N being a positive integer greater than 1. The charging control apparatus includes: a control unit configured to: perform charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system, where the first battery is any one of the M batteries, and the second battery is a battery with a smallest SOC in the K batteries; or perform charging control on the battery system based on a difference between a voltage of a third battery in the M batteries and a voltage of a fourth battery in the K batteries, under a condition that the battery with the smallest SOC in the N batteries has not been connected in parallel to the battery system, where the third battery is any one of the M batteries and the fourth battery is a battery with a smallest voltage in the K batteries; where both M and K are positive integers and N=M+K.

In a possible implementation, the control unit includes: a determining subunit configured to: determine, based on the difference between the SOC of the first battery and the SOC of the second battery, whether to connect the first battery in parallel to the battery system, under the condition that the battery with the smallest SOC in the N batteries has been connected in parallel to the battery system; or determine, based on the difference between the voltage of the third battery and the voltage of the fourth battery, whether to connect the third battery in parallel to the battery system, under the condition that the battery with the smallest SOC in the N batteries has not been connected in parallel to the battery system.

In a possible implementation, the charging control apparatus is applied to the battery system that has not been applied with high voltage, and the charging control apparatus further includes: a determining unit configured to: under a condition that a battery with a smallest voltage in the N batteries has been connected in parallel to the battery system, determine whether the battery with the smallest SOC in the N batteries has been connected in parallel to the battery system.

In a possible implementation, the determining subunit is specifically configured to: determine whether the difference between the SOC of the first battery and the SOC of the second battery is greater than a first threshold, under the condition that the battery with the smallest SOC in the N batteries has been connected in parallel to the battery system; and determine, based on a difference between a voltage of the first battery and the voltage of the fourth battery, whether to connect the first battery in parallel to the battery system, under a condition that the difference between the SOC of the first battery and the SOC of the second battery is not greater than the first threshold.

In a possible implementation, the determining subunit is specifically configured to: under a condition that the difference between the SOC of the first battery and the SOC of the second battery is not greater than the first threshold, determine whether the difference between the voltage of the first battery and the voltage of the fourth battery is greater than a second threshold; and under a condition that the difference between the voltage of the first battery and the voltage of the fourth battery is not greater than the second threshold, determine to connect the first battery in parallel to the battery system.

In a possible implementation, the determining subunit is specifically configured to: under a condition that the difference between the SOC of the first battery and the SOC of the second battery is not greater than the first threshold, determine whether the difference between the voltage of the first battery and the voltage of the fourth battery is greater than a second threshold; and under a condition that the difference between the voltage of the first battery and the voltage of the fourth battery is greater than the second threshold, determine not to connect the first battery in parallel to the battery system.

In a possible implementation, the determining subunit is specifically configured to: under the condition that the battery with the smallest SOC in the N batteries has been connected in parallel to the battery system, determine whether the difference between the SOC of the first battery and the SOC of the second battery is greater than a first threshold; and under a condition that the difference between the SOC of the first battery and the SOC of the second battery is greater than the first threshold, determine not to connect the first battery in parallel to the battery system.

In a possible implementation, the determining subunit is specifically configured to: under a condition that the difference between the SOC of the first battery and the SOC of the second battery is greater than the first threshold, determine not to connect (M-1) batteries of the M batteries other than the first battery in parallel to the battery system, where M is greater than 1.

In a possible implementation, the determining subunit is specifically configured to: under the condition that the battery with the smallest SOC in the N batteries has not been connected in parallel to the battery system, determine whether the difference between the voltage of the third battery and the voltage of the fourth battery is greater than a second threshold; and under a condition that the difference between the voltage of the third battery and the voltage of the fourth battery is not greater than the second threshold, determine to connect the third battery in parallel to the battery system.

In a possible implementation, the determining subunit is specifically configured to: under the condition that the battery with the smallest SOC in the N batteries has not been connected in parallel to the battery system, determine whether the difference between the voltage of the third battery and the voltage of the fourth battery is greater than a second threshold; and under a condition that the difference between the voltage of the third battery and the voltage of the fourth battery is greater than the second threshold, determine not to connect the third battery in parallel to the battery system.

In a possible implementation, the determining subunit is specifically configured to: under the condition that the difference between the voltage of the third battery and the voltage of the fourth battery is greater than the second threshold, determine not to connect (M-1) batteries of the M batteries other than the third battery in parallel to the battery system, where M is greater than 1.

In a possible implementation, the control unit further includes: a control subunit configured to control the battery system to be applied with high voltage.

In a possible implementation, the determining unit is further configured to: before it is determined whether the battery with the smallest SOC in the N batteries has been connected in parallel to the battery system, determine whether a voltage of a fifth battery in L batteries, not yet connected in parallel to the battery system, of the N batteries is less than a voltage of a sixth battery in Q batteries already connected in parallel to the battery system; and determine, under a condition that the voltage of the fifth battery is less than the voltage of the sixth battery, whether to connect the fifth battery in parallel to the battery system; where the fifth battery is any one of the L batteries, the sixth battery is a battery with a smallest voltage in the Q batteries, L and Q are positive integers, and N=L+Q, L being greater than or equal to M.

In a possible implementation, the determining unit is specifically configured to: under the condition that the voltage of the fifth battery is less than the voltage of the sixth battery, determine whether the difference between the voltage of the fifth battery and the voltage of the sixth battery is greater than a second threshold; and under a condition that the difference between the voltage of the fifth battery and the voltage of the sixth battery is not greater than the second threshold, determine to connect the fifth battery in parallel to the battery system.

In a possible implementation, the fifth battery is a battery with a smallest voltage in the L batteries.

In a possible implementation, the charging control apparatus is applied to the battery system that has been applied with high voltage.

In a possible implementation, the control unit further includes: a control subunit configured to: under the condition that the battery with the smallest SOC in the N batteries has been connected in parallel to the battery system, perform power-reduction control charging on the K batteries based on the difference between the SOC of the first battery and the SOC of the second battery. The determining subunit specifically configured to: under a condition that power-reduction control charging is performed on the K batteries, determine whether to connect the first battery in parallel to the battery system.

In a possible implementation, the determining subunit is specifically configured to: determine, based on a difference between a voltage of the K batteries and the voltage of the first battery, whether to connect the first battery in parallel to the battery system, under the condition that power-reduction control charging is performed on the K batteries.

In a possible implementation, the determining subunit is specifically configured to: under the condition that power-reduction control charging is performed on the K batteries, determine whether the difference between the voltage of the K batteries and the voltage of the first battery is greater than a second threshold; and under a condition that the difference between the voltage of the K batteries and the voltage of the first battery is not greater than the second threshold, determine to connect the first battery in parallel to the battery system.

In a possible implementation, the determining subunit is specifically configured to: under the condition that power-reduction control charging is performed on the K batteries, determine whether the difference between the voltage of the K batteries and the voltage of the first battery is greater than a second threshold; and under a condition that a difference of the voltage of the K batteries minus the voltage of the first battery is greater than the second threshold, determine not to connect the first battery in parallel to the battery system.

In a possible implementation, the control subunit is specifically configured to: perform power-reduction control charging on the K batteries under a condition that the difference between the SOC of the first battery and the SOC of the second battery is not greater than a first threshold.

In a possible implementation, the control subunit is specifically configured to: under a condition that the difference between the SOC of the first battery and the SOC of the second battery is greater than a first threshold, perform power-reduction control charging on the K batteries based on a difference between an open circuit voltage OCV corresponding to the voltage of the K batteries and the voltage of the first battery.

In a possible implementation, the control subunit is specifically configured to: perform power-reduction control charging on the K batteries under a condition that a difference of the open circuit voltage OCV minus the voltage of the first battery is greater than or equal to a third threshold.

In a possible implementation, the determining subunit is further configured to: under the condition that power-reduction control charging is performed on the K batteries, determine whether a difference of the voltage of the first battery minus the voltage of the K batteries from is greater than the second threshold; and a request subunit configured to: under a condition that the difference of the voltage of the first battery minus the voltage of the K batteries is greater than the second threshold, request to charge the K batteries based on a value in a charge current look-up table for the K batteries.

In a possible implementation, the determining subunit is specifically configured to: under the condition that power-reduction control charging is performed on the K batteries, determine whether a first sampling current of the K batteries is greater than a fourth threshold; and under a condition that the first sampling current of the K batteries is not greater than the fourth threshold, determine, based on the difference between the voltage of the K batteries and the voltage of the first battery, whether to connect the first battery in parallel to the battery system.

In a possible implementation, the control subunit is further configured to: perform power-reduction control charging on the K batteries under a condition that a second sampling current of the K batteries is greater than the fourth threshold.

In a possible implementation, the voltage of the K batteries is a maximum voltage in K voltages of the K batteries.

In a possible implementation, the determining subunit is specifically configured to: under the condition that the battery with the smallest SOC in the N batteries has not been connected in parallel to the battery system, perform power-reduction control charging on the K batteries based on the difference between the voltage of the third battery and the voltage of the fourth battery; and determine, under a condition that power-reduction control charging is performed on the K batteries, whether to connect the third battery in parallel to the battery system.

In a possible implementation, the determining subunit is specifically configured to: under the condition that power-reduction control charging is performed on the K batteries, determine, based on a difference between a voltage of the K batteries and the voltage of the third battery, whether to connect the third battery in parallel to the battery system.

In a possible implementation, the control subunit is specifically configured to: perform power-reduction control charging on the K batteries under a condition that the difference between the voltage of the third battery and the voltage of the fourth battery is within a predetermined range.

In a possible implementation, the determining subunit is specifically configured to: under a condition that the difference between the voltage of the third battery and the voltage of the fourth battery is within the predetermined range, determine to connect the third battery in parallel to the battery system.

In a possible implementation, the third battery is a battery with a smallest voltage in the M batteries.

According to a third aspect, a charging control apparatus for battery system is provided, and the battery system includes N batteries, N being a positive integer greater than 1. The charging control apparatus includes a memory and a processor, the memory is configured to store instructions, the processor is configured to read the instructions and execute, based on the instructions, the method according to the first aspect and any one of the possible implementations of the first aspect.

According to a fourth aspect, a chip is provided and includes a processor, configured to invoke a computer program from a memory and run the computer program, so that a device equipped with the chip performs the method according to the first aspect and any one of the possible implementations of the first aspect.

According to a fifth aspect, a computer program is provided, characterized in that the computer program causes a computer to perform the method according to the first aspect and any one of the possible implementations of the first aspect.

According to a sixth aspect, a computer-readable storage medium is provided and configured to store a computer program, where the computer program causes a computer to perform the method according to the first aspect and any one of the possible implementations of the first aspect.

According to a seventh aspect, a computer program product is provided, characterized by including computer program instructions, where the computer program instructions causes a computer to perform the method according to the first aspect and any one of the possible implementations of the first aspect.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of an application scenario disclosed in an embodiment of this application.
FIG. 2 is a schematic block diagram of a battery system disclosed in an embodiment of this application.
FIG. 3 is a schematic block diagram of a charging control method for battery system disclosed in an embodiment of this application.
FIG. 4 is a schematic flowchart of a charging control method for battery system disclosed in an embodiment of this application.
FIG. 5 is another schematic flowchart of a charging control method for battery system disclosed in an embodiment of this application.
FIG. 6 is a schematic block diagram of a charging control apparatus for battery system disclosed in an embodiment of this application.
FIG. 7 is another schematic block diagram of a charging control apparatus for battery system disclosed in an embodiment of this application.

### DETAILED DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the descriptions of this application, it should be noted that, unless otherwise stated, " a plurality of " means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", and "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings and do not limit the specific structure of the application. In the descriptions of this application, it should also be noted that, unless otherwise specified and defined explicitly, the terms "mount", "connect", "join", and "fasten" should be understood in their general senses. For example, they may refer to a fixed connection, a detachable connection, or an integral connection, and may refer to a direct connection or an indirect connection through an intermediate medium. Persons of ordinary skill in the art can understand specific meanings of these terms in this application as appropriate to specific situations.

In the new energy field, a traction battery may be used as a major traction source for an electric apparatus (such as a vehicle, a ship, or a spacecraft), and an energy storage battery may be a charging source for the electric apparatus. The importance of the traction battery and the energy storage battery is taken for granted. As examples rather than limitations, in some application scenarios, the traction battery may be a battery in an electric apparatus, and the energy storage battery may be a battery in a charging apparatus. For ease of description, in the following, both traction batteries and energy storage batteries may be referred to collectively as batteries.

At present, most batteries in energy storage systems and electric vehicles use a form of parallel connection of a plurality of batteries to meet the capacity and performance requirements of the energy storage systems and electric vehicles. As the scale of the system increases and an increasing number of batteries are connected in parallel, current imbalance of the parallel-connected batteries may be caused due to differences of parameters such as battery voltage, internal resistance, or self-discharge rate, and even generates loops in severe cases, affecting service life and performance of the energy storage system, and leading to safety hazards. Therefore, during charging of a battery system with a plurality of batteries connected in parallel, a relay inside each battery cannot be switched on directly, but needs to be switched on at the right time to avoid the phenomenon of current imbalance.

In view of this, the embodiments of this application provides a charging control method for battery system, where based on a difference between a battery not connected to a working circuit and a battery with a smallest SOC or a smallest voltage already connected to the working circuit, it is determined whether to control a battery not connected to the working circuit not to connect to the working circuit. This helps avoid current imbalance caused by differences in battery voltage, internal resistance, self-discharge rate, and other parameters among batteries during charging of a battery system with a plurality of batteries connected in parallel, thereby improving service life and performance of the battery system.

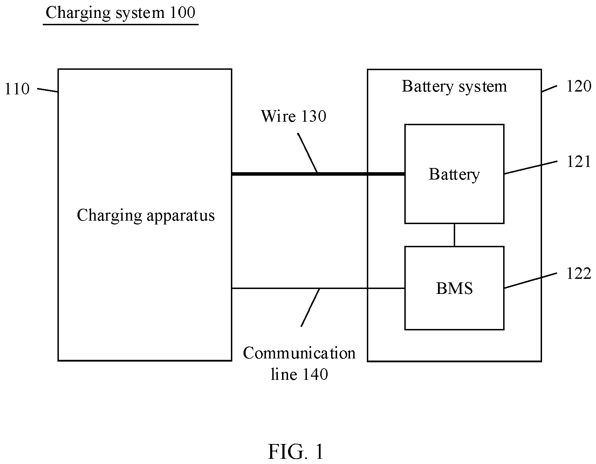

FIG. 1 is an architectural diagram of a charging system to which embodiments of this application are applicable.

As shown in FIG. 1, the charging system 100 may include: a charging apparatus 110 and a battery system 120. Optionally, the battery system 120 may be a battery system in an electric vehicle (including pure electric vehicles and pluggable hybrid electric vehicles) or a battery system in other application scenarios.

Optionally, the battery system 120 may be provided with at least one battery pack (battery pack), and the at least one battery pack as a whole may be collectively referred to as a traction battery 121. In terms of category of the battery, the battery 121 may be a battery of any type, including but not limited to a lithium-ion battery, a lithium metal battery, a lithium-sulfur battery, a lead-acid battery, a nickel-cadmium battery, a lithium iron phosphate battery, nickel hydrogen battery, or lithium air battery. In terms of scale of the battery, the battery 121 in this embodiment of this application may be a cell/battery cell (cell), or a battery module or a battery pack, and the battery module or battery pack may be formed by a plurality of batteries in series and parallel, and in this embodiment of this application, the specific type and scale of the battery 121 are not specifically limited.

In addition, in order to intelligently manage and maintain the battery 121 to prevent overcharge and over-discharge of the battery and extend service life of the battery, the battery system 120 is generally further provided with a battery management system (battery management system, BMS) 122 for monitoring a status of the traction battery 121. Optionally, the BMS 122 may be integrated with the battery 121 in a same device/apparatus, or the BMS 122 may be disposed outside the battery 121 as a separate device/apparatus.

Specifically, the charging apparatus 110 is an apparatus that supplies electrical energy to the battery 121 in the battery system 120.

Optionally, the charging apparatus 110 in this embodiment of this application may be an ordinary charging post, a super charging post, or a charging post supporting vehicle to grid (vehicle to grid, V2G) mode. A specific type and specific application scenario of the charging apparatus 110 are not limited in this embodiment of this application.

Optionally, as shown in FIG. 1, the charging apparatus 110 may be connected to the battery 121 via a wire 130 and to the BMS 122 via a communication line 140, where the communication line 140 is used for information exchange between the charging apparatus 110 and the BMS.

In an example, the communication line 140 includes but is not limited to a controller area network (control area network, CAN) communication bus or a daisy chain (daisy chain) communication bus.

Optionally, in addition to communicating with the BMS 122 through the communication line 140, the charging apparatus 110 can also communicate with the BMS 122 through a wireless network. This embodiment of this application does not specifically limit the type of wired communication or the type of wireless communication between the charging apparatus and the BMS 122.

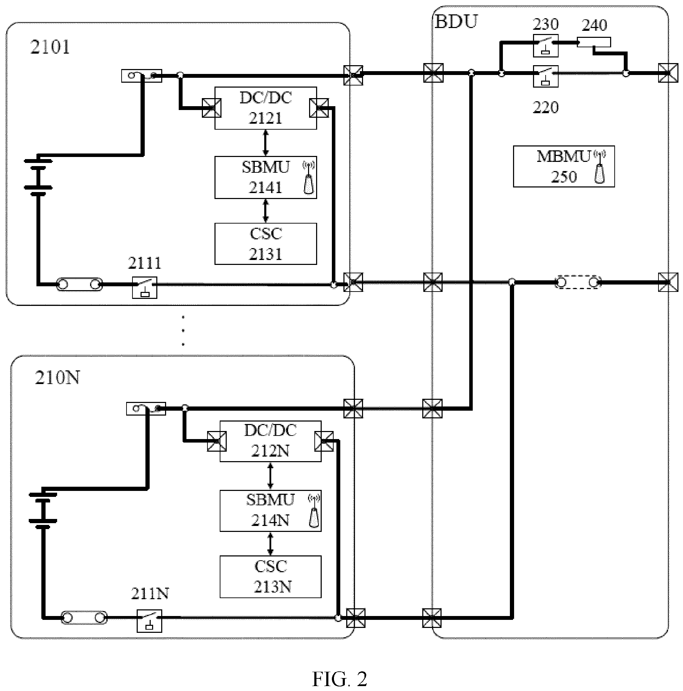

FIG. 2 is a high voltage architecture topology diagram of a battery system to which embodiments of this application are applicable.

Optionally, this battery system 200 may correspond to the battery system 120 shown in FIG. 1. As shown in FIG. 2, the battery system 200 may include a plurality of batteries 210 connected in parallel, for example, a battery 2101, ..., and a battery 210N. Optionally, one negative electrode relay 211, for example, a negative electrode relay 2111, ..., and a negative electrode relay 211 1N, may be provided within each battery 210. Optionally, the negative electrode relay 211 is connected in series with negative electrodes of batteries in the batteries 210. The negative electrode relay 211 is configured to control high voltage connection and disconnection of the battery 210 from the entire vehicle system. Optionally, the battery 210 may further be provided with a DC/DC (direct current/direct current, DC/DC) converter 212, for example, a DC/DC converter 2121, ..., and a DC/DC converter 212N. The DC/DC converter 212 is configured to convert high voltage within the battery 210 to low voltage to supply low voltage to electrical components and hardware. Optionally, the battery 210 is further provided with a cell supervisory control (cell supervisory control, CSC) unit 213 for collecting battery voltage and battery temperature of the battery 210, for example, CSC 2131, ..., and CSC 213N. Optionally, a current sampling unit may be further provided inside the battery 210 for collecting current of the battery 210.

Optionally, the battery system 200 may also include: a main positive relay 220, and the main positive relay 220 is provided on a busbar after the plurality of batteries 210 are connected in parallel, and is configured for controlling connection and disconnection of the battery system 200 to and from high voltage of the entire vehicle system or the charging apparatus 110 shown in FIG. 1.

Optionally, the battery system 200 further includes a pre-charge relay 230 and a pre-charge resistor 240 for high voltage pre-charging.

Optionally, the battery system 200 is provided with a master battery management unit (master battery management unit, MBMU) 250. The battery 210 is provided with a battery management unit 214 (slave battery management unit, SBMU), for example, SBMU 2141, ..., and SBMU 214N. The MBMU and the SBMU communicate with each other, and the MBMU 250 is able to obtain a status such as current value, cell voltage, relay status, and power of the battery 210 from the SBMU 214. Communication between the MBMU 250 and the SBMU 214 is not limited to wireless Bluetooth, CAN bus, Ethernet, 5G network communication, and the like.

In some embodiments, the SBMU 214 can be implemented by using a battery management system (Battery Management System, BMS) of a corresponding battery 210; and the MBMU 250 can be implemented by using a control module of a battery disconnect unit (Battery Disconnect Unit, BDU) or by using a BMS of one of the batteries 210.

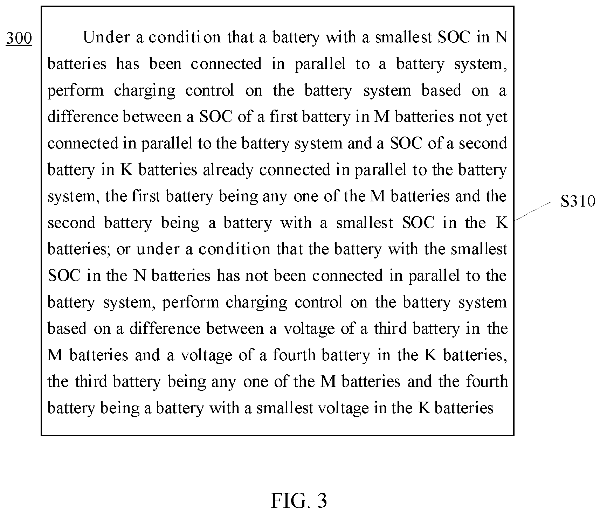

FIG. 3 is a schematic block diagram of a charging control method 300 for battery system according to an embodiment of this application. The battery system includes N batteries, N being a positive integer greater than 1. As shown in FIG. 3, the charging control method 300 may include some or all of the following.

S310: Under a condition that a battery with a smallest SOC in the N batteries has been connected in parallel to the battery system, perform charging control on the battery system based on a difference between a SOC of a first battery in M batteries not yet connected in parallel to the battery system and a SOC of a second battery in K batteries already connected in parallel to the battery system, the first battery being any one of the M batteries and the second battery being a battery with a smallest SOC in the K batteries; or under a condition that the battery with the smallest SOC in the N batteries has not been connected in parallel to the battery system, perform charging control on the battery system based on a difference between a voltage of a third battery in the M batteries and a voltage of a fourth battery, the third battery being any one of the M batteries and the fourth battery being a battery with a smallest voltage in the K batteries; where both M and K are positive integers and N=M+K.

First, it should be noted that charging control on the battery system may specifically include controlling a relay 211 within the battery 210 shown in FIG. 2 to be on or off, or controlling a main positive relay 220 provided inside the battery system 200 shown in FIG. 2 to be on or off. It may also include determining a switch-on occasion of the relay 211 and the main positive relay 220, and so on. Any action performed by the control unit inside the battery system during charging may be considered as charging control on the battery system. For example, charging control on the battery system includes: a slave battery management unit SBMU shown in FIG. 2 controls each of the N batteries to be connected in parallel to the battery system, a master battery management unit MBMU shown in FIG. 2 controls the N batteries to be applied with the high voltage, the MBMU controls whether the batteries are connected in parallel to the battery system, and so on. That is, the charging control method 300 in this embodiment of this application may be performed by the MBMU and SBMU shown in FIG. 2.

The SOC of the battery is usually an actual SOC of the battery estimated by using various methods. The voltage of the battery may be a cumulative sum voltage of voltages of cells or a terminal voltage of the battery collected by a voltage collection unit (for example, a CSC 213 shown in FIG. 2).

It should be understood that a difference between A and B in this embodiment of this application may be either A-B or B-A. For example, the difference between the SOC of the first battery and the SOC of the second battery may be a difference of the SOC of the first battery minus the SOC of the second battery or a difference of the SOC of the second battery minus the SOC of the first battery. Further, for example, the difference between the voltage of the third battery and the voltage of the fourth battery may be a difference of the voltage of the third battery minus the voltage of the fourth battery or a difference of the voltage of the fourth battery minus the voltage of the third battery.

In this embodiment, under the condition that the battery with the smallest SOC in the N batteries has been connected in parallel to the battery system, charging control is performed on the battery system based on a SOC difference between the battery not yet connected in parallel to the battery system and the battery with the smallest SOC that is already connected in parallel to the battery system; or under the condition that the battery with the smallest SOC in the N batteries has not been connected in parallel to the battery system, charging control is performed on the battery system based on a voltage difference between the battery not yet connected in parallel to the battery system and the battery with the smallest voltage connected in parallel to the battery system. In this embodiment of this application, different charging control strategies are used based on whether the battery with the smallest SOC in the N batteries has been connected in parallel to the battery system, which is conducive to avoiding current imbalance caused by differences in battery voltage, internal resistance, self-discharge rate, and other parameters among batteries during charging of a battery system with a plurality of batteries connected in parallel. This helps improve service life and performance of the battery system.

In addition, as compared with the technical solution that whether to connect in parallel a battery not yet connected in parallel to a battery system to the battery system is determined only based on a voltage difference between batteries not yet connected in parallel to the battery system and batteries already connected in parallel to the battery system, in this embodiment of this application, whether to connect in parallel a battery not connected in parallel to the battery system to the battery system also based on a SOC difference between the batteries not yet connected in parallel to the battery system and the batteries already connected in parallel to the battery system. This can be better applied to batteries having open circuit voltage (open circuit voltage, OCV) with a relatively wide voltage plateau range (where a SOC of a cell with such voltage plateau range changes significantly but a voltage does not), for example, lithium iron phosphate batteries.

Optionally, in this embodiment of this application, the performing charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system includes: determining, based on the difference between the SOC of the first battery and the SOC of the second battery, whether to connect the first battery in parallel to the battery system, under the condition that the battery with the smallest SOC in the N batteries has been connected in parallel to the battery system; or the performing charging control on the battery system based on a difference between a voltage of a third battery in the M batteries and a voltage of a fourth battery in the K batteries, under a condition that the battery with the smallest SOC in the N batteries has not been connected in parallel to the battery system includes: determining, based on the difference between the voltage of the third battery and the voltage of the fourth battery, whether to connect the third battery in parallel to the battery system, under the condition that the battery with the smallest SOC in the N batteries has not been connected in parallel to the battery system.

In this embodiment, under the condition that the battery with the smallest SOC in the N batteries has been connected in parallel to the battery system, whether a battery not yet connected in parallel to the battery system is to be connected in parallel to the battery system is determined based on a SOC difference between the battery not yet connected in parallel to the battery system and the battery with the smallest SOC that is already connected in parallel to the battery system; or under the condition that the battery with the smallest SOC in the N batteries has not been connected in parallel to the battery system, whether a battery not yet connected in parallel to the battery system is to be connected in parallel to the battery system is determined based on a voltage difference between the battery not yet connected in parallel to the battery system and the battery with the smallest voltage connected in parallel to the battery system. In this embodiment of this application, different charging control strategies are used based on whether the battery with the smallest SOC in the N batteries has been connected in parallel to the battery system, which can avoid current imbalance caused by differences in battery voltage, internal resistance, self-discharge rate, and other parameters among batteries during charging of a battery system with a plurality of batteries connected in parallel, thereby improving service life and performance of the battery system.

Optionally, in this embodiment of this application, the charging control method 300 is applied to the battery system that has not been applied with high voltage, and the charging control method 300 further includes: under a condition that a battery with a smallest voltage in the N batteries has been connected in parallel to the battery system, determining whether the battery with the smallest SOC in the N batteries has been connected in parallel to the battery system.

It should be understood that the charging control method 300 may be applied to the battery system that has not been applied with high voltage, that is, the charging control method 300 may be performed before the main positive relay 220 shown in FIG. 2 is switched on. Specifically, determining whether the battery with the smallest voltage in the N batteries has been connected in parallel to the battery system may be performed before determining whether the battery with the smallest SOC in the N batteries has been connected in parallel to the battery system. Optionally, under a condition that it is determined that the battery with the smallest voltage of the N batteries has not been connected in parallel to the battery system, the battery with the smallest voltage may be connected in parallel to the battery system. Under a condition that the battery with the smallest voltage has been connected in parallel to the battery system, it is further determined whether the battery with the smallest SOC in the N batteries has been connected in parallel to the battery system.

In this embodiment, under the condition that the battery with the smallest voltage in the N batteries has been connected in parallel to the battery system, it is determined whether the battery with the smallest SOC in the N batteries has been connected in parallel to the battery system. In this way, under a condition that a voltage is not symmetrical to a SOC (that is, the battery with the smallest voltage is not the battery with the smallest SOC), a battery with a voltage lower than that of the battery with the smallest voltage in the batteries already connected in parallel to the battery system can be prevented from not being able to connect in parallel to the battery system due to missing an occasion of parallel connection to the battery system, thereby improving the charging efficiency.

Optionally, in this embodiment of this application, S310 may specifically include: determining whether the difference between the SOC of the first battery and the SOC of the second battery is greater than a first threshold, under the condition that the battery with the smallest SOC in the N batteries has been connected in parallel to the battery system; and determining, based on a difference between a voltage of the first battery and the voltage of the third battery, whether to connect the first battery in parallel to the battery system, under a condition that the difference between the SOC of the first battery and the SOC of the second battery is not greater than the first threshold.

The first threshold may be set by considering, but being not limited to, the following factors: an error in SOC estimation and a voltage rise value at a point when the battery is charged to a SOC of the first threshold. That is, the first threshold is based on the error in SOC estimation and a SOC rise value corresponding to a voltage rise of the battery that reaches a voltage threshold during charging. A loop value corresponding to the voltage threshold falls within a safe loop range. The first threshold may be a fixed value, for example, 5%, or the first threshold may be dynamically adjusted based on various parameters of the battery.

In this embodiment, under the condition that the battery with the smallest SOC in the N batteries has been connected in parallel to the battery system and the difference between the SOC of the first battery and the SOC of the second battery is greater than the first threshold, whether to control the first battery to be connected in parallel to the battery system is determined based on the difference between the voltage of the first battery and the voltage of the third battery. This helps avoid sticking, shortened service life, or damage to cells caused by impact of loops on a relay due to an excessively large voltage difference during parallel connection of the batteries to the battery system.

Optionally, in this embodiment of this application, the determining, based on a difference between a voltage of the first battery and the voltage of the fourth battery, whether to connect the first battery in parallel to the battery system, under a condition that the difference between the SOC of the first battery and the SOC of the second battery is not greater than the first threshold includes: under the condition that the difference between the SOC of the first battery and the SOC of the second battery is not greater than the first threshold, determining whether the difference between the voltage of the first battery and the voltage of the fourth battery is greater than a second threshold; and under a condition that the difference between the voltage of the first battery and the voltage of the fourth battery is not greater than the second threshold, determining to connect the first battery in parallel to the battery system.

The second threshold may be set by considering a magnitude of the loop value obtained after parallel connection of the batteries. That is, the second threshold is determined based on the magnitude of the loop value obtained after parallel connection of the batteries. Optionally, the second threshold may be set as follows: a loop value corresponding to the second threshold falls within the safe loop range. The second threshold may be a fixed value, for example, 5 V, or the second threshold may be dynamically adjusted based on various parameters of the battery.

In this embodiment, it is determined to connect the first battery in parallel to the battery system only under a condition that the difference between the SOC of the first battery and the SOC of the second battery is not greater than the first threshold and the voltage difference between the first battery and the fourth battery is not greater than the second threshold. For the problem of asymmetry between the SOC and the voltage, both the SOC difference and the voltage difference are considered. This can avoid sticking, shortened service life, or damage to cells caused by impact of loops on a relay due to an excessively large voltage difference during parallel connection of the batteries to the battery system.

The second threshold described above can alternatively be dynamically adjusted. For example, the second threshold may be obtained by the following formula: ΔV=(Ri+Rj)×Ix, where Ix=Min(Y(x)map,F(x)map). ΔV is the second threshold, and Ri and Rj are respectively an internal resistance of the battery already connected in parallel to the battery system and an internal resistance of the battery not yet connected in parallel to the battery system. The internal resistance may be calculated as R=f(x)=(αT, βSOC, δSOH), that is, the internal resistance of the battery is obtained in real time by a mathematical model of temperature T, state of charge (state of charge, SOC), and state of health (state of health, SOH). Ix is an allowable charging current of the battery, taking the smaller of its Y(x)map and F(x)map. Y(x)map is an allowable charging current obtained from a charging current map at a current temperature and SOC value, and F(x)map is a maximum loop value that allows the relay to switch on but does not damage capacitive life of the relay. Thus, with Ix, the maximum safe loop value generated for allowing incorporation of batteries is obtained in real time, and then the second threshold ΔV for allowing incorporation of batteries can be calculated.

In this embodiment, the second threshold is dynamically adjusted, so that the battery can be allowed as much as possible to be connected in parallel to the battery system provided that the battery connected in parallel to the battery system generates a safe loop value, thereby reducing the number of batteries that cannot be connected in parallel to the battery system.

Optionally, in this embodiment of this application, the determining, based on a difference between a voltage of the first battery and the voltage of the fourth battery, whether to connect the first battery in parallel to the battery system, under a condition that the difference between the SOC of the first battery and the SOC of the second battery is not greater than the first threshold includes: under the condition that the difference between the SOC of the first battery and the SOC of the second battery is not greater than the first threshold, determining whether the difference between the voltage of the first battery and the voltage of the fourth battery is greater than a second threshold; and under a condition that the difference between the voltage of the first battery and the voltage of the fourth battery is greater than the second threshold, determining not to connect the first battery in parallel to the battery system.

In this embodiment, under the condition that the difference between the SOC of the first battery and the SOC of the second battery is not greater than the first threshold, if the voltage difference between the first battery and the fourth battery is greater than the second threshold, it is determined not to connect the first battery in parallel to the battery system. This can avoid the problem of sticking, shortened service life, or damage to cells caused by impact of loops on a relay during incorporation of batteries due to an excessively large voltage difference from the batteries already connected in parallel to the battery system.

Optionally, in this embodiment of this application, the determining, based on the difference between the SOC of the first battery in the M batteries, not yet connected in parallel to the battery system, of the N batteries and the SOC of the second battery in the K batteries already connected in parallel to the battery system, whether to connect the first battery in parallel to the battery system, under the condition that the battery with the smallest SOC in the N batteries has been connected in parallel to the battery system further includes: under the condition that the battery with the smallest SOC in the N batteries has been connected in parallel to the battery system, determining whether the difference between the SOC of the first battery and the SOC of the second battery is greater than a first threshold; and under a condition that the difference between the SOC of the first battery and the SOC of the second battery is greater than the first threshold, determining not to connect the first battery in parallel to the battery system.

In other words, once it is determined that the difference between the SOC of the first battery and the SOC of the second battery is greater than the first threshold, it can be considered that the first battery connected in parallel to the battery system may result in an excessively large loop value, so the first battery can be temporarily not connected in parallel to the battery system at that time, that is, the relay in the first battery is not switched on. Next, it is possible to determine in turn whether batteries other than the first battery in the M batteries not connected in parallel to the battery system are appropriate to be connected in parallel to the battery system.

In this embodiment, once the difference between the SOC of the first battery and the SOC of the second battery is greater than the first threshold, it is determined not to connect the first battery in parallel to the battery system. This can avoid the problem of sticking, shortened service life, or damage to cells caused by impact of loops on a relay during parallel connection of batteries to the battery system.

Optionally, in this embodiment of this application, the first battery is a battery with a smallest SOC in the M batteries, and the performing charging control on the battery system further includes: under a condition that the difference between the SOC of the first battery and the SOC of the second battery is greater than the first threshold, determining to control (M-1) batteries of the M batteries other than the first battery not to be connected in parallel to the battery system, where M is greater than 1.

In this embodiment, the SOC of the first battery with the smallest SOC in the M batteries not yet connected in parallel to the battery system is compared with the SOC of the second battery with the smallest SOC in the K batteries connected in parallel to the battery system. Once it is determined not to connect the first battery in parallel to the battery system, no further judgment may be made on other batteries, thereby reducing a judgment time prior to charging and helping improve the charging efficiency.

Optionally, in this embodiment of this application, the determining, based on the difference between the voltage of the third battery in the M batteries and the voltage of the fourth battery, whether to connect the third battery in parallel to the battery system, under the condition that the battery with the smallest SOC in the N batteries has not been connected in parallel to the battery system includes: under the condition that the battery with the smallest SOC in the N batteries has not been connected in parallel to the battery system, determining whether the difference between the voltage of the third battery and the voltage of the fourth battery is greater than a second threshold; and under a condition that the difference between the voltage of the third battery and the voltage of the fourth battery is not greater than the second threshold, determining to connect the third battery in parallel to the battery system.

In this embodiment, under the condition that the battery with the smallest SOC has not been connected in parallel to the battery system, if the voltage difference between the third battery and the fourth battery is not greater than the second threshold, it is determined to connect the third battery in parallel to the battery system. This can avoid the problem of sticking, shortened service life, or damage to cells caused by impact of loops on a relay during parallel connection of batteries to the battery system due to a large voltage difference from switched-on batteries, and can also improve charging efficiency by incorporating as many batteries not yet connected in parallel to the battery system as possible to the battery system for charging.

Optionally, in this embodiment of this application, the determining, based on the difference between the voltage of the third battery in the M batteries and the voltage of the fourth battery, whether to connect the third battery in parallel to the battery system, under the condition that the battery with the smallest SOC in the N batteries has not been connected in parallel to the battery system includes: under the condition that the battery with the smallest SOC in the N batteries has not been connected in parallel to the battery system, determining whether the difference between the voltage of the third battery and the voltage of the fourth battery is greater than a second threshold; and under a condition that the difference between the voltage of the third battery and the voltage of the fourth battery is greater than the second threshold, determining not to connect the third battery in parallel to the battery system.

In other words, under the condition that the battery with the smallest SOC in the N batteries has not been connected in parallel to the battery system, once it is determined that the difference between the voltage of the third battery and the voltage of the fourth battery is greater than the second threshold, it can be considered that parallel connection of the third battery to the battery system may result in an excessively large loop value, so the third battery can be temporarily not connected in parallel to the battery system at that time, that is, the relay in the third battery is not switched on. Next, it is possible to determine in turn whether batteries other than the third battery in the M batteries not connected in parallel to the battery system are appropriate to be connected in parallel to the battery system.

In this embodiment, under the condition that the battery with the smallest SOC has not been connected in parallel to the battery system, if the voltage difference between the third battery and the fourth battery is greater than the second threshold, it is determined not to connect the third battery in parallel to the battery system. This can avoid the problem of sticking, shortened service life, or damage to cells caused by impact of loops on a relay during parallel connection of batteries to the battery system due to a large voltage difference from the batteries already connected in parallel to the battery system.

Optionally, in this embodiment of this application, the third battery is a battery with a smallest voltage in the M batteries, and the performing charging control on the battery system further includes: under the condition that the difference between the voltage of the third battery and the voltage of the fourth battery is greater than the second threshold, determining not to connect (M-1) batteries of the M batteries other than the third battery in parallel to the battery system, where M is greater than 1.

In this embodiment, the voltage of the third battery with the smallest voltage in the M batteries not yet connected in parallel to the battery system is compared with the voltage of the fourth battery with the smallest voltage in the K batteries connected in parallel to the battery system. Once it is determined not to connect the third battery in parallel to the battery system, no further judgment may be made on other batteries, thereby reducing a judgment time prior to charging and helping improve the charging efficiency.

In other embodiments, if the battery with the smallest SOC in the N batteries has not been connected in parallel to the battery system, it may be first determined whether a SOC difference between the battery with the smallest SOC in the N batteries and the second battery is greater than the first threshold, and if the SOC difference between the battery with the smallest SOC in the N batteries and the second battery is not greater than the first threshold, the battery with the smallest SOC in the N batteries may be first connected in parallel to the battery system. Then, judgment continues to be made in turn for remaining batteries not yet connected in parallel to the battery system according to the embodiment of this application for the battery with the smallest SOC in the N batteries that has been connected in parallel to the battery system. If the SOC difference between the battery with the smallest SOC in the N batteries and the second battery is greater than the first threshold, judgment is mad for the remaining batteries not yet connected in parallel to the battery system according to the embodiment of this application for the battery with the smallest SOC in the N batteries that has not been connected to the working circuit.

Optionally, in this embodiment of this application, the performing charging control on the battery system further includes: controlling the battery system to be applied with high voltage.

In other words, once it is determined that the battery with the smallest SOC or the battery with the smallest voltage in the M batteries not yet connected in parallel to the battery system is not suitable for parallel connection to the battery system, it can be considered that all the remaining batteries in the M batteries are not suitable for parallel connection to the battery system. In this case, the battery system can be applied with high voltage, that is, the main positive relay 220 in FIG. 2 is switched on, causing the charging apparatus to charge the battery system. More precisely, because the M batteries in the N batteries have not been connected in parallel to the battery system, the charging apparatus is actually charging the K batteries connected in parallel to the battery system.

In this embodiment, because the M batteries not yet connected in parallel to the battery system do not meet a static switch-on condition, controlling the K batteries to charge makes both the SOC and voltage of the K batteries change dynamically, which helps determining, during charging, an occasion of connecting the M batteries in parallel to the battery system. In this way, as many non-faulty batteries as possible can be incorporated into the battery system for charging, thereby improving the charging efficiency.

Optionally, in this embodiment of this application, before it is determined whether the battery with the smallest SOC in the N batteries has been connected in parallel to the battery system, the charging control method 300 further includes: determining whether a voltage of a fifth battery in L batteries, not yet connected in parallel to the battery system, of the N batteries is less than a voltage of a sixth battery in Q batteries already connected in parallel to the battery system; and determining, under a condition that the voltage of the fifth battery is less than the voltage of the sixth battery, whether to connect the fifth battery in parallel to the battery system; where the fifth battery is any one of the L batteries, the sixth battery is a battery with a smallest voltage in the Q batteries, L and Q are positive integers, and N=L+Q, L being greater than or equal to M.

Specifically, it is determined in turn whether the voltage of the battery not yet connected in parallel to the battery system is lower than the voltage of the battery with the smallest voltage that is already connected in parallel to the battery system, and if lower, the battery determined as being not yet connected in parallel to the battery system is then connected in parallel to the battery system. Through comparison between voltages of all batteries not connected in parallel to the battery system with the voltage of the battery with the smallest voltage in the batteries already connected in parallel to the battery system, it is possible to ensure that the battery with the smallest voltage in the N batteries is connected in parallel to the battery system.

In this embodiment, the battery with the smallest voltage in the N batteries is connected in parallel to the battery system as much as possible before determining of whether the battery with the smallest SOC in the N batteries has been connected in parallel to the battery system. In this way, a battery with a voltage lower than that of the battery with the smallest voltage in the batteries already connected in parallel to the battery system can be prevented from not being able to connect in parallel to the battery system due to missing an occasion of parallel connection to the battery system.

Optionally, in this embodiment of this application, the determining, under a condition that the voltage of the fifth battery is less than the voltage of the sixth battery, whether to connect the fifth battery in parallel to the battery system includes: under the condition that the voltage of the fifth battery is less than the voltage of the sixth battery, determining whether the difference between the voltage of the fifth battery and the voltage of the sixth battery is greater than a second threshold; and under a condition that the difference between the voltage of the fifth battery and the voltage of the sixth battery is not greater than the second threshold, determining to connect the fifth battery in parallel to the battery system.

In other words, if the difference between the voltage of the fifth battery and the voltage of the sixth voltage is greater than the second threshold, it may be determined not to connect the fifth battery in parallel to the battery system.

In this embodiment, when the battery with the smallest voltage in the N batteries is connected in parallel to the battery system, the difference from the voltage of the battery with the smallest voltage in the batteries already connected in parallel to the battery system is considered. This can avoid the problem of sticking, shortened service life, or damage to cells caused by impact of loops on a relay during incorporation of batteries due to an excessively large voltage difference from the batteries already connected in parallel to the battery system.

Optionally, in this embodiment, the fifth battery is a battery with a smallest voltage in the L batteries.

In this embodiment, the voltage of the fifth battery with the smallest voltage in the L batteries not yet connected in parallel to the battery system is compared with the voltage of the sixth battery with the smallest voltage in the Q batteries already connected in parallel to the battery system. Once it is determined not to connect the fifth battery in parallel to the battery system, the battery with the smallest voltage in the N batteries may be considered to be already connected in parallel to the battery system; or once it is determined to connect the fifth battery in parallel to the battery system, it may be considered that in the case of parallel connection of the fifth battery to the battery system, the battery with the smallest voltage in the N batteries has been also connected in parallel to the battery system. In this case, no further judgment may be made on other batteries, thereby reducing a judgment time prior to charging and helping improve the charging efficiency.

It should be noted that the battery with the smallest voltage in the N batteries can be connected in parallel to the battery system before high voltage is applied to the battery system. However, when the electric vehicle is charged immediately after a long period of driving, cells of each battery have not completed the process of static depolarization. Therefore, if a charging gun is plugged immediately in this process, the voltage of each battery may fluctuate due to an inconsistent depolarization speed caused by a difference in temperature and other factors. In this way, before determining of whether the battery with the smallest SOC in the N batteries has been connected in parallel to the battery system, it may be further determined again whether a battery whose voltage is lower than that of the battery with the smallest voltage in the batteries connected in parallel to the battery system is present in the batteries not yet connected in parallel to the battery system, thereby facilitating parallel connection of an actual battery with the smallest voltage in the N batteries to the battery system.

Optionally, in this embodiment of this application, the charging control method 300 is applied to the battery system that has been applied with high voltage.

That is, the charging control method 300 can be executed after the main positive relay 220 shown in FIG. 2 is switched on.

In this embodiment, during charging, different charging control strategies are used based on whether the battery with the smallest SOC in the N batteries has been connected in parallel to the battery system, which helps avoid current imbalance caused by differences in battery voltage, internal resistance, self-discharge rate, and other parameters among batteries during charging of a battery system with a plurality of batteries connected in parallel, thereby improving service life and performance of the battery system.

Optionally, in this embodiment of this application, the determining, based on the difference between the SOC of the first battery in the M batteries, not yet connected in parallel to the battery system, of the N batteries and the SOC of the second battery in the K batteries already connected in parallel to the battery system, whether to connect the first battery in parallel to the battery system, under the condition that the battery with the smallest SOC in the N batteries has been connected in parallel to the battery system includes: under the condition that the battery with the smallest SOC in the N batteries has been connected in parallel to the battery system, performing power-reduction control charging on the K batteries based on the difference between the SOC of the first battery and the SOC of the second battery; and under the condition that power-reduction control charging is performed on the K batteries, determining, based on a difference between a voltage of the K batteries and the voltage of the first battery, whether to connect the first battery in parallel to the battery system.

It should be noted that power-reduction control charging means requesting the charging apparatus to charge the battery system at a reduced request current. For example, at the beginning of charging the batteries already connected in parallel to the battery system, charging may be requested based on a value in a charge current look-up table for the batteries already connected in parallel to the battery system. Further, charging may be requested based on the difference between the SOC of the first battery and the SOC of the second battery by using a request current lower than the value in the charge current look-up table. For example, charging may be requested using a request current 0.1 times the value in the charge current look-up table.

In the charging process, the voltage of the battery already connected in parallel to the battery system is falsely high due to the charging polarization caused by a charging current of the battery already connected in parallel to the battery system. The voltage of the battery during charging is a dynamic voltage instead of a real voltage. If judgment is made based on the dynamic voltage of the battery connected in parallel to the battery system and a static voltage of the battery not yet connected in parallel to the battery system, an excessively large voltage difference may be resulted to form a severe shock, leading to problems of damage to cells or sticking of relays, and also leading to problems such as over-current charging caused by loops due to direct incorporation of batteries during high current charging.

Therefore, in this embodiment, under the condition that the battery with the smallest SOC in the N batteries has been connected in parallel to the battery system, power-reduction control charging is performed on the K batteries based on the difference between the SOC of the first battery and the SOC of the second battery; and in the case of the power-reduction control charging, it is then determined, based on the difference between the voltage of the K batteries and the voltage of the first battery, whether to connect the first battery in parallel to the battery system. This helps avoid problems such as severe shock, damage to the cells, or sticking relays due to an excessively large voltage difference, as well as proneness to charging overcurrent caused by loops due to direct incorporation of batteries during high-current charging.

Optionally, in this embodiment of this application, the determining, based on a difference between a voltage of the K batteries and the voltage of the first battery, whether to connect the first battery in parallel to the battery system, under the condition that power-reduction control charging is performed on the K batteries includes: under the condition that power-reduction control charging is performed on the K batteries, determining whether the difference between the voltage of the K batteries and the voltage of the first battery is greater than a second threshold; and under a condition that the difference between the voltage of the K batteries and the voltage of the first battery is not greater than the second threshold, determining to connect the first battery in parallel to the battery system.

In this embodiment, under the condition that power-reduction control charging is performed on the K batteries based on the difference between the SOC of the first battery and the SOC of the second battery, if the difference between the voltage of the K batteries and the voltage of the first battery is not greater than the second threshold, it is determined to connect the first battery in parallel to the battery system. This can avoid the problem of sticking, shortened service life, or damage to cells caused by impact of loops on a relay during incorporation of batteries due to an excessively large voltage difference from the switched-on battery, and also allows as many non-faulty batteries as possible to be connected in parallel to the battery system.

Optionally, in this embodiment of this application, the determining, based on a difference between a voltage of the K batteries and the voltage of the first battery, whether to control to connect the first battery in parallel to the battery system, under the condition that power-reduction control charging is performed on the K batteries includes: under the condition that power-reduction control charging is performed on the K batteries, determining whether the difference between the voltage of the K batteries and the voltage of the first battery is greater than a second threshold; and under a condition that a difference of the voltage of the K batteries minus the voltage of the first battery is greater than the second threshold, determining not to connect the first battery in parallel to the battery system.

In this embodiment, under the condition that power-reduction control charging is performed on the K batteries based on the difference between the SOC of the first battery and the SOC of the second battery, if the difference of the voltage of the K batteries minus the voltage of the first battery is greater than the second threshold, it is determined not to connect the first battery in parallel to the battery system. This can avoid the problem of sticking, shortened service life, or damage to cells caused by impact of loops on a relay during incorporation of batteries due to an excessively large voltage difference from batteries already connected in parallel to the battery system.

Optionally, in this embodiment of this application, the performing power-reduction control charging on the K batteries based on the difference between the SOC of the first battery and the SOC of the second battery includes: performing power-reduction control charging on the K batteries under a condition that the difference between the SOC of the first battery and the SOC of the second battery is not greater than a first threshold.

In this embodiment, if the SOC difference between the first battery and the second battery is not greater than the first threshold, the power-reduction control charging may be performed directly on the K batteries, which can reduce the risk of failure in parallel connection to the battery system even after successful request for current regulation due to voltage overcharging of the batteries already connected in parallel to the battery system.

Optionally, in this embodiment of this application, the performing power-reduction control charging on the K batteries based on the difference between the SOC of the first battery and the SOC of the second battery includes: under a condition that the difference between the SOC of the first battery and the SOC of the second battery is greater than a first threshold, performing power-reduction control charging on the K batteries based on a difference between an open circuit voltage (open circuit voltage, OCV) corresponding to the voltage of the K batteries and the voltage of the first battery.

It should be noted that when this charging control method 300 is applied to the charging process, the voltages of the batteries already connected in parallel to the battery system are usually dynamic voltages, that is, variable voltages. Therefore, the voltage of the K batteries is actually a dynamic voltage of the K batteries. Optionally, the dynamic voltage of the K batteries may be a dynamic voltage of any one of the K batteries, for example, a dynamic voltage in a battery with a largest dynamic voltage in the K batteries. An open circuit voltage corresponding to the dynamic voltage may be obtained by formula U₀=U-IR, where U₀ represents an open-circuit voltage, U represents a cumulative sum voltage of cells, I represents a current of a corresponding battery, and R represents a 1 s direct current internal resistance.

In this embodiment, under the condition that the difference between the SOC of the first battery and the SOC of the second battery is greater than the first threshold, power-reduction control charging is further performed on the K batteries based on the difference between the open circuit voltage corresponding to the voltage of the K batteries and the voltage of the first battery. This can avoid missing a switch-on occasion of batteries that have a larger SOC difference from the switched-on battery but have a smaller voltage difference.

Optionally, in this embodiment of this application, the performing power-reduction control charging on the K batteries based on a difference between an open circuit voltage OCV corresponding to the voltage of the K batteries and the voltage of the first battery includes: performing power-reduction control charging on the K batteries under a condition that a difference of the open circuit voltage OCV minus the voltage of the first battery is greater than or equal to a third threshold.

The third threshold is set by considering the following factors: overcharging and a voltage difference for allowing switch-on of the relay, and a possible error in polarization of an internal resistance of the cell. In other words, the third threshold may be determined based on the overcharging and the voltage difference for allowing switch-on of the relay, and the possible error in polarization of an internal resistance of the cell. Similar to the first threshold and the second threshold, the third threshold may be a fixed value, for example, 4.5 V The third threshold may alternatively be dynamically adjusted, which is not limited by this embodiment of this application.

In this embodiment, power-reduction control charging is performed on the K batteries under the condition that the difference of the open circuit voltage minus the voltage of the first battery is greater than or equal to the third threshold. This helps accurately connect in parallel or not connect in parallel a battery not yet connected in parallel to the battery system to the battery system, based on the difference between an actual voltage of the battery already connected in parallel to the battery system and a voltage of the battery not yet connected in parallel to the battery system. This can avoid the problem of sticking, shortened service life, or damage to cells caused by impact of loops on a relay during incorporation of batteries due to an excessively large voltage difference from switched-on batteries, and also allows as many non-faulty batteries as possible to be connected in parallel to the battery system.

Optionally, in this embodiment of this application, the performing charging control on the battery system further includes: under the condition that power-reduction control charging is performed on the K batteries, determining whether a difference of the voltage of the first battery minus the voltage of the K batteries from is greater than the second threshold; and under a condition that the difference of the voltage of the first battery minus the voltage of the K batteries is greater than the second threshold, requesting to charge the K batteries based on a value in a charge current look-up table for the K batteries.

The value in the charge current look-up table for the K batteries is usually determined based on various factors such as a SOC, temperature, and voltage of the K-batteries. That is, after the high voltage has been applied to the system, the battery system needs to obtain a value in the charge current look-up table based on the current SOC, temperature, and/or voltage of the K batteries, and request the charging apparatus based on the value in the charge current look-up table to perform charging. Afterwards, after power-reduction control charging described in the foregoing various embodiments is performed, for example, requesting, based on a value 0.1 times the value in the charge current look-up table, the charging apparatus to perform charging. If it is determined that the difference of the voltage of the first battery minus the voltage of the K batteries is greater than the second threshold, the charging limit is released again, that is, the charging apparatus is requested once again based on the value in the charge current look-up table to perform charging.

In this embodiment, a charging limit is released under the condition that the difference of the voltage of the first battery minus the voltage of the K batteries is greater than the second threshold. This can avoid the problem of inefficient charging caused by prolonged power-reduction control charging on the battery system.

Optionally, in an embodiment of this application, the determining, based on a difference between a voltage of the K batteries and the voltage of the first battery, whether to connect the first battery in parallel to the battery system, under the condition that power-reduction control charging is performed on the K batteries includes: under the condition that power-reduction control charging is performed on the K batteries, determining whether a first sampling current of the K batteries is greater than a fourth threshold; and under a condition that the first sampling current of the K batteries is not greater than the fourth threshold, determining, based on the difference between the voltage of the K batteries and the voltage of the first battery, whether to connect the first battery in parallel to the battery system.

The fourth threshold is set by comprehensively considering both impact of charging polarization on a voltage and a charging time. The fourth threshold may be a fixed value, for example, 0.1C, that is, 0.1 times a corresponding charging current at nominal capacity. The fourth threshold may alternatively be dynamically adjusted.

That is, under the condition that power-reduction control charging is performed on the K batteries, whether a current sampling current is greater than the fourth threshold may be first determined, and if the sampling current of the K batteries is not greater than the fourth threshold, access of the first battery can be directly controlled based on the difference between the voltage of the K batteries and the voltage of the first battery. This can prevent misjudgment during subsequent controlling of an access status of the first battery based on the difference between the voltage of the K batteries and the voltage of the first battery, where the misjudgment is caused by the phenomenon of false highs of the voltage of the batteries already connected in parallel to the battery system due to charging polarization.

Optionally, in this embodiment of this application, charging control on the battery system further includes: under the condition that power-reduction control charging is performed on the K batteries, determining whether a difference of a second sampling current of the K batteries minus a target regulation current is greater than a fifth threshold; and under a condition that the difference of the second sampling current of the K batteries minus the target regulation current is greater than the fifth threshold, determining not to connect the first battery in parallel to the battery system, where the target regulation current is A times the value in the charge current look-up table for the K batteries, A being greater than 0 and less than 1.

Similarly, the fifth threshold may be a fixed value, for example, 5 A. The fifth threshold may alternatively be dynamically adjusted. The target regulation current is A times the value in the charge current look-up table for the K batteries, for example, A is 0.1. It should be noted that the first sampling current herein is similar to the second sampling current below, both being sampling currents of the K batteries at different moments. For example, the second sampling current may be a sampling current of the K batteries collected after power-reduction control charging of the K batteries. The first sampling current below may be a sampling current of the K batteries collected before power-reduction control charging of the K batteries.

In this embodiment, if the second sampling current of the K batteries is greater than the target regulation current for a specific value, it means that the first battery has not yet reached a condition for determining whether to be connected in parallel to the battery system. Therefore, determining not to connect the first battery in parallel to the battery system at that time can avoid the problem of sticking, shortened service life, or damage to cells caused by impact of loops on a relay during incorporation of batteries due to an excessively large voltage difference from the switched-on battery.

Optionally, in this embodiment of this application, the performing power-reduction control charging on the K batteries further includes: performing power-reduction control charging on the K batteries under a condition that a first sampling current of the K batteries is greater than the fourth threshold.

In this embodiment, power-reduction control charging is performed on the K batteries under the condition that the first sampling current of the K batteries is greater than the fourth threshold. This helps avoid problems such as severe shock, damage to the cells, or sticking relays due to an excessively large voltage difference, as well as proneness to charging overcurrent caused by loops due to direct incorporation of batteries during high-current charging.

Optionally, in this embodiment of this application, the voltage of the K batteries is a maximum voltage in K voltages of the K batteries.

Theoretically, the voltages of the batteries in the battery system that have been connected in parallel to the battery system need to be equal, and determining based on the maximum voltage of the K batteries is intended to prevent the batteries not connected in parallel to the battery system from missing the switch-on occasion because a voltage of a battery with a higher voltage in the batteries already connected in parallel to the battery system is charged to even higher to be greater than those of the batteries not connected in parallel to the battery system for more than the second threshold at the presence of loop and inconsistency between voltages of the batteries already connected in parallel to the battery system.

Optionally, in this embodiments of this application, the determining, based on the difference between the voltage of the third battery in the M batteries and the voltage of the fourth battery in the K batteries, whether to connect the third battery in parallel to the battery system, under the condition that the battery with the smallest SOC in the N batteries has not been connected in parallel to the battery system includes: under the condition that the battery with the smallest SOC in the N batteries has not been connected in parallel to the battery system, performing power-reduction control charging on the K batteries based on the difference between the voltage of the third battery and the voltage of the fourth battery; and under the condition that power-reduction control charging is performed on the K batteries, determining, based on a difference between a voltage of the K batteries and the voltage of the third battery, whether to connect the third battery in parallel to the battery system.

In this embodiment, under the condition that the battery with the smallest SOC in the N batteries has not been connected in parallel to the battery system, power-reduction control charging is performed on the batteries based on the voltage difference between the third battery and the fourth battery, and whether to connect the third battery in parallel to the battery system is further determined based on the difference between the voltage of K batteries and the voltage of the third battery. This helps avoid problems such as severe shock, damage to the cells, or sticking relays due to an excessively large voltage difference, as well as proneness to charging overcurrent caused by loops due to direct incorporation of batteries during high-current charging.

Optionally, in this embodiment of this application, the performing power-reduction control charging on the K batteries based on the difference between the voltage of the third battery and the voltage of the fourth battery includes: performing power-reduction control charging on the K batteries under a condition that the difference between the voltage of the third battery and the voltage of the fourth battery is within a predetermined range.

The preset range needs to be set by considering presence of polarization voltage. In other words, because the polarization voltage is present for the battery that has been connected in parallel to the battery system, that is, the voltage is falsely high, if the voltage of the battery already connected in parallel to the battery system is even lower than the voltage of the battery not yet connected in parallel to the battery system, the voltage becomes even lower after current reduction. Therefore, there is a minimum value for the preset range. In addition, in order to prevent the real voltage of the battery already connected in parallel to the battery system from becoming too high after charging, the battery not yet connected in parallel to the battery system cannot be switched on, and therefore the preset range has a maximum value. For example, the preset range may be 0.5 V to 5 V

In this embodiment, power-reduction control charging is performed on the K batteries under the condition that the difference between the voltage of the third battery and the voltage of the fourth battery is within the predetermined range. This helps avoid problems such as severe shock, damage to the cells, or sticking relays due to an excessively large voltage difference, as well as proneness to charging overcurrent caused by loops due to direct incorporation of batteries during high-current charging.

Optionally, in this embodiment of this application, the determining, based on a difference between a voltage of the K batteries and the voltage of the third battery, whether to connect the third battery in parallel to the battery system includes: under a condition that the difference between the voltage of the third battery and the voltage of the fourth battery is within the predetermined range, determining to connect the third battery in parallel to the battery system.

In this embodiment, under the condition that the difference between the voltage of the third battery and the voltage of the fourth battery is within the predetermined range, it is determined to connect the third battery in parallel to the battery system. This can avoid problems such as severe shock, damage to the cells, or sticking relays due to an excessively large voltage difference.

Optionally, in this embodiment, the third battery is a battery with a smallest voltage in the M batteries.

In this embodiment, the voltage of the battery with the smallest voltage in the M batteries not yet connected to the battery system is compared with a low voltage of the battery with the smallest voltage in the K batteries already connected to the battery system. Once the battery with the smallest voltage in the M batteries cannot meet a switch-on condition, no further judgment is made on other non-switched-on batteries in sequence, and charging of the K batteries continues until a new occasion is found, thereby reducing complexity of algorithms.

It should be noted that the charging control method 300 in this embodiment of this application can be applied to both the charging control procedure of the battery system in a static state and the charging control procedure of the battery system in a dynamic state. That is, the charging control procedure of the battery system in a static state can use the charging control method 300 while the charging control procedure of the battery system in a dynamic state does not use the charging control method 300. Alternatively, the charging control procedure of the battery system in a static state does not use the charging control method 300 while the charging control procedure of the battery system in a dynamic state uses the charging control method 300. Further alternatively, the charging control procedure of the battery system in a static state uses the charging control method 300 and the charging control procedure of the battery system in a dynamic state also uses the charging control method 300.

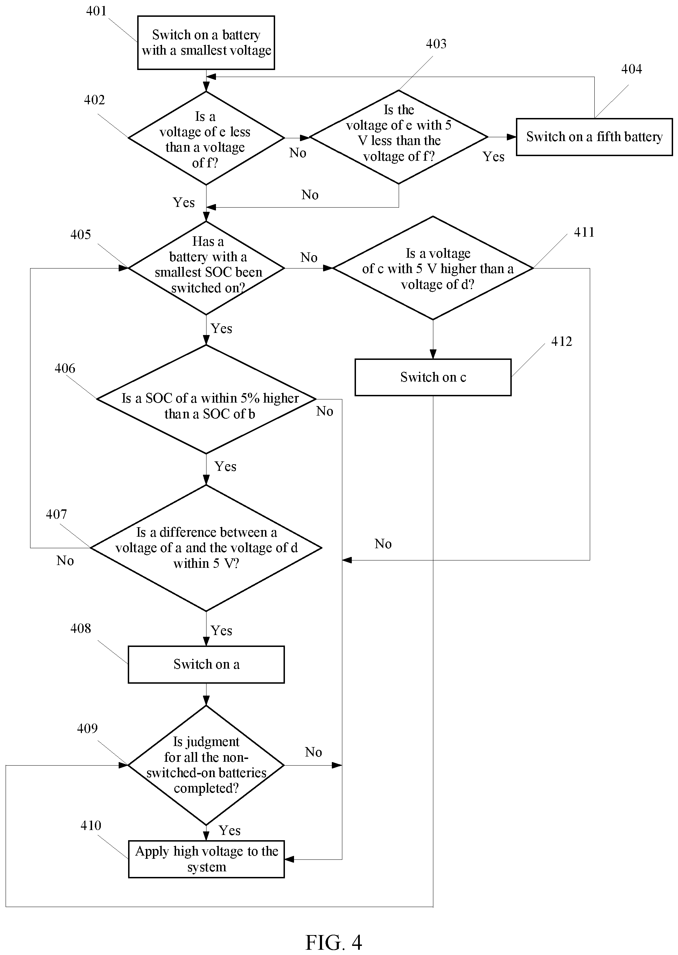

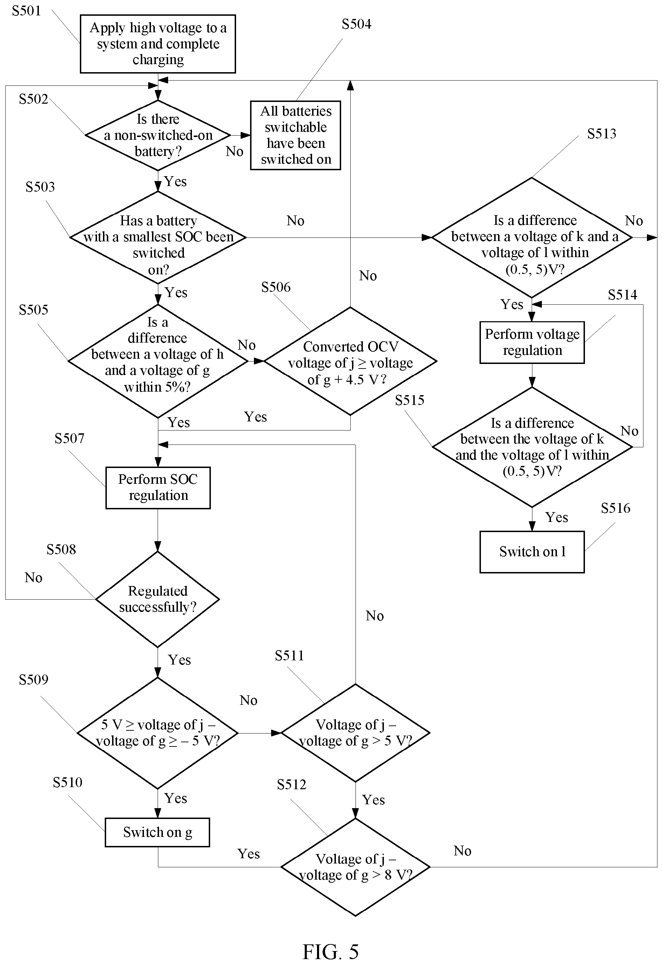

The charging control procedure of the battery system in a static state and the charging control procedure of the battery system in a dynamic state provided in the embodiments of this application are described in detail below with reference to FIG. 4 and FIG. 5, respectively.

For ease of description, in the embodiment described in FIG. 4, a battery with a smallest SOC in batteries not yet connected in parallel to a battery system is referred to as a, a battery with a smallest SOC in batteries already connected in parallel to a battery system is referred to as b, a battery with a smallest voltage in the batteries not yet connected in parallel to a battery system is referred to as c, and a battery with a smallest voltage in the batteries already connected in parallel to a battery system is referred to as d. Before determining of a battery with a smallest SOC in N batteries, a battery with a smallest voltage in the batteries not yet connected in parallel to a battery system is referred to e and a battery with a smallest voltage in the switched-on batteries is referred to as f.

As shown in FIG. 4, the charging control procedure 400 in the battery system in a static state may include some or all of the following steps.

S401. Switch on the battery with the smallest voltage in the N batteries.

S402. Determine whether a smallest voltage of non-switched-on batteries is less than a smallest voltage of switched-on batteries. That is, it is determined whether a voltage of the battery e in the non-switched-on batteries is less than a voltage of the battery f in the switched-on batteries.

S403. If a judgment result of S402 is yes, continue to determine whether the voltage of the battery e is within 5 V less than the voltage of the battery f.

S404. If a judgment result of S403 is yes, switch on the battery e.

Optionally, after S404, return to perform step S402.

If the judgment result of S403 is not, proceed with step S405.

Similarly, if the judgment result of S402 is not, proceed with step S405.

S405. Determine whether the battery with the smallest SOC in the N batteries has been switched on.

S406. If a judgment result of S405 is yes, proceed to determine whether a SOC of the battery with the smallest SOC in the non-switched-on batteries falls within 5% higher than a SOC of the battery with the smallest SOC in the switched-on batteries, that is, determine whether the SOC of battery a falls within 5% higher than the SOC of the battery b.

S407. If a judgment result of S406 is yes, further determine whether the difference between the voltage of the battery a and the voltage of the battery d with the smallest voltage in the switched-on batteries falls within 5 V

S408. If a judgment result of S407 is yes, switch on the battery a.

Optionally, if the judgment result of S406 is not, proceed with step S410.

Optionally, if the judgment result of S407 is not, return to perform step S405.

S409. After step S408, determine whether judgment for all the non-switched-on batteries is completed.

Optionally, if a judgment result of S409 is yes, proceed with step S410.

Optionally, if the judgment result of S409 is not, return to step S406.

S410. Apply high voltage to the system.

S411. If the judgment result of S405 is yes, determine whether a voltage of the battery with the smallest voltage in the non-switched-on batteries is within 5 V higher than a voltage of the battery with the smallest voltage in the switched-on batteries, that is, determine whether the voltage of the battery c is within 5 V higher than the voltage of the battery d.

S412. If a judgment result of S411 is yes, switch on the battery c.

Optionally, if the judgment result of S411 is not, perform step S410.

Optionally, after step S412, step S409 may be performed.

For ease of description, in the embodiment described in FIG. 5, a battery requested to be switched on in non-switched-on batteries is referred to as g, a battery with a smallest SOC in switched-on batteries is referred to as h, and a battery with a largest dynamic voltage in the switched-on batteries is referred to as j. The battery with the smallest voltage in the switched-on batteries is referred to as k and the battery with the smallest voltage in the non-switched-on batteries is referred to as 1.

As shown in FIG. 5, the charging control procedure 500 in the battery system in a dynamic state may include some or all of the following content.

S501. Apply high voltage to a system and complete charging.

S502. Determine whether there is a non-switched-on battery.

S503. If a judgment result of step S502 is yes, determine whether a battery with a smallest SOC in N batteries has been switched on.

S504. If the judgment result of step S502 is not, determine that all batteries switchable have been switched on.

S505. If a judgment result of step S503 is yes, continue to determine whether a difference between a SOC of the battery with the smallest SOC in the switched-on batteries and the SOC of the battery requested to be switched on falls within 5%. That is, it is determined whether a difference between the SOC of the battery h and the SOC of the battery g falls within 5%.

S506. If a judgment result of step S505 is not, continue to determine whether an OCV voltage converted from a voltage of a battery with a largest dynamic voltage in the switched-on batteries is greater than or equal to the voltage of the battery requested to be switched on +4.5 V, and that is, determine whether an OCV voltage converted from a dynamic voltage of the battery j is greater than or equal to the voltage of the battery g +4.5 V

Optionally, if a judgment result of S506 is not, return to perform step S502.

S507. If a judgment result of step S505 or step S506 is yes, proceed to SOC regulation. For example, the request current is adjusted from the value in the charge current look-up table to 0.1 times the value in the charge current look-up table.

S508. After S507, determine whether regulation is successful. For example, it is determined whether a sampling current of the switched-on battery is greater than a 0.1C charging current, and if the sampling current is not greater than the 0.1C charging current, SOC regulation is successful.

Optionally, if a judgment result of S508 is not, return to perform step S502.

S509. If a judgment result of S508 is yes, further determine whether a difference between a voltage of a battery requested to be switched on and a voltage of a battery with a largest voltage in the switched-on batteries falls within ±5 V That is, it is determined whether the difference between the voltage of the battery g and the voltage of the battery j falls within ±5 V

S510. If a judgment result of step S509 is yes, it is considered that regulation is successful and the battery g is switched on.

S511. If the judgment result of step S509 is not, further determine whether the voltage of the battery with the largest voltage in the switched-on batteries minus the voltage of the requested switched-on battery is greater than 5 V, that is, determine whether the voltage of j minus the voltage of g is greater than 5 V

S512. If a judgment result of step S511 is yes, further determine whether the voltage of j minus the voltage of g is greater than 8 V

Optionally, if a judgment result of S512 is not, perform step S510.

Optionally, if the judgment result of S512 is not, return to perform step S502.

Optionally, if the judgment result of step S511 is not, continue to perform charging based on the value in the charging current look-up table again, and after a specific condition is satisfied, perform step S507.

S513. If the judgment result of step S503 is not, further determine whether the difference between the smallest voltage of the switched-on battery and the voltage of the non-switched-on battery falls within 0.5 V to 5 V, that is, determine whether a voltage difference between the battery k and the battery l falls within 0.5 V to 5 V

S514. If the judgment result of step S513 is yes, perform voltage regulation using the battery l as reference.

S515. After step S514, determine whether the voltage difference between the battery k and the battery l falls within 0.5 V to 5 V

S516. If the judgment result of step S515 is yes, switch on the battery l.

Optionally, if the judgment result of step S515 is not, resume charging, and after a specific condition is satisfied, continue to perform S514.

Optionally, if the judgment result of S513 is not, return to step S502.

Optionally, steps S507 to S513 may specifically include the following content.

Step 0: After the high voltage has been applied to the system, charge the switched-on battery based on the value in the charge current look-up table for the current switched-on battery; determine whether the sampling current of the current switched-on battery is less than or equal to 0.1C charging current, and if the sampling current of the current switched-on battery is greater than the 0.1C charging current, jump to step 1 after 1s; if the sampling current of the current switched-on battery is less than or equal to 0.1C charging current, further determine whether the difference between the voltage of the switched-on battery and the voltage of the battery requested to be switched on is within -5 V to 5 V; if the voltage difference is within -5 V to 5 V, switch on the battery requested to be switched on; if a difference of the voltage of the switched-on battery minus the voltage of the battery requested to be switched on is greater than 5 V, determine not to switch on the battery requested to be switched on and record an identifier of the battery requested to be switched on. If returning from step 1 to step 0 to perform charging based on the value in the charging current check-up table, provided that any one of the following conditions is satisfied, jump to step 1 to lower the current: 1. it is determined that the SOC of the battery requested to be switched on has been charged to be 2% higher; 2. it is determined that the switched-on battery triggers a pre-overcharging condition for the non-switched-on battery (that is, a converted OCV voltage of the switched-on battery is greater than the voltage of the battery requested to be switched on +4.5 V), where for regulation this time, the condition is triggered only once.

Step 1: Adjust the request current to be 0.1 times the value in the charging current check-up table, and after charging is performed for 180s at the adjusted request current or after the sampling current of the current switched-on battery is +3 A less than the adjusted request current for 3s, further determine whether the sampling current of the current switched-on battery is greater than 0.1C charge current. If the sampling current of the current switched-on battery is less than or equal to 0.1C charging current, continue to determine whether the difference between the voltage of the switched-on battery and the voltage of the battery requested to be switched on is within -5 V to 5 V; if the voltage difference is within -5 V to 5 V, switch on the battery requested to be switched on; if a difference of the voltage of the switched-on battery minus the voltage of the battery requested to be switched on is greater than 5 V, determine not to switch on the battery requested to be switched on and record an identifier of the battery requested to be switched on; similarly, if the difference of the voltage of the switched-on battery minus the voltage of the battery requested to be switched on is less than -5 V, return to step 0 for charging continuously; and if the sampling current of the current switched-on battery is greater than the adjusted request current +5 A, determine not to switch on the battery requested to be switched on and record an identifier of the battery requested to be switched on.

It should be noted that "within" in this embodiment of this application means including an endpoint.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

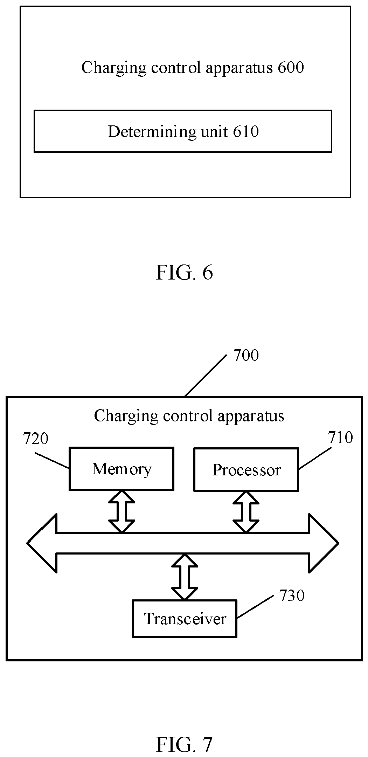

The charging control method for battery system in the embodiments of this application is described in detail above, and the charging control apparatus in the embodiments of this application is described in detail below with reference to FIG. 6. The technical features described in the method embodiments are applicable to the following apparatus embodiments.

FIG. 6 is a schematic block diagram of a charging control apparatus 600 for battery system according to an embodiment of this application. The battery system includes N batteries, N being a positive integer greater than 1. As shown in FIG. 6, the charging control apparatus 600 includes some or all of the following content.

A control unit 610 is configured to: perform charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system, where the first battery is any one of the M batteries, and the second battery is a battery with a smallest SOC in the K batteries; or perform charging control on the battery system based on a difference between a voltage of a third battery in the M batteries and a voltage of a fourth battery in the K batteries, under a condition that the battery with the smallest SOC in the N batteries has not been connected in parallel to the battery system, where the third battery is any one of the M batteries and the fourth battery is a battery with a smallest voltage in the K batteries; where both M and K are positive integers and N=M+K.

Optionally, in this embodiment of this application, the control unit includes: a determining subunit configured to: determine, based on the difference between the SOC of the first battery and the SOC of the second battery, whether to connect the first battery in parallel to the battery system, under the condition that the battery with the smallest SOC in the N batteries has been connected in parallel to the battery system; or determine, based on the difference between the voltage of the third battery and the voltage of the fourth battery, whether to connect the third battery in parallel to the battery system, under the condition that the battery with the smallest SOC in the N batteries has not been connected in parallel to the battery system.

Optionally, in this embodiment of this application, the charging control apparatus is applied to the battery system that has not been applied with high voltage, and the charging control apparatus further includes: a determining unit configured to: under a condition that a battery with a smallest voltage in the N batteries has been connected in parallel to the battery system, determine whether the battery with the smallest SOC in the N batteries has been connected in parallel to the battery system.

Optionally, in this embodiment of this application, the determining subunit is specifically configured to: determine whether the difference between the SOC of the first battery and the SOC of the second battery is greater than a first threshold, under the condition that the battery with the smallest SOC in the N batteries has been connected in parallel to the battery system; and determine, based on a difference between a voltage of the first battery and the voltage of the fourth battery, whether to connect the first battery in parallel to the battery system, under a condition that the difference between the SOC of the first battery and the SOC of the second battery is not greater than the first threshold.

Optionally, in this embodiment of this application, the determining subunit is specifically configured to: under a condition that the difference between the SOC of the first battery and the SOC of the second battery is not greater than the first threshold, determine whether the difference between the voltage of the first battery and the voltage of the fourth battery is greater than a second threshold; and under a condition that the difference between the voltage of the first battery and the voltage of the fourth battery is not greater than the second threshold, determine to connect the first battery in parallel to the battery system.

Optionally, in this embodiment of this application, the determining subunit is specifically configured to: under a condition that the difference between the SOC of the first battery and the SOC of the second battery is not greater than the first threshold, determine whether the difference between the voltage of the first battery and the voltage of the fourth battery is greater than a second threshold; and under a condition that the difference between the voltage of the first battery and the voltage of the fourth battery is greater than the second threshold, determine not to connect the first battery in parallel to the battery system.

Optionally, in this embodiment of this application, the determining subunit is specifically configured to: under the condition that the battery with the smallest SOC in the N batteries has been connected in parallel to the battery system, determine whether the difference between the SOC of the first battery and the SOC of the second battery is greater than a first threshold; and under a condition that the difference between the SOC of the first battery and the SOC of the second battery is greater than the first threshold, determine not to connect the first battery in parallel to the battery system.

Optionally, in this embodiment of this application, the determining subunit is specifically configured to: under a condition that the difference between the SOC of the first battery and the SOC of the second battery is greater than the first threshold, determine not to connect (M-1) batteries of the M batteries other than the first battery in parallel to the battery system, where M is greater than 1.

Optionally, in this embodiment of this application, the determining subunit is specifically configured to: under the condition that the battery with the smallest SOC in the N batteries has not been connected in parallel to the battery system, determine whether the difference between the voltage of the third battery and the voltage of the fourth battery is greater than a second threshold; and under a condition that the difference between the voltage of the third battery and the voltage of the fourth battery is not greater than the second threshold, determine to connect the third battery in parallel to the battery system.

Optionally, in this embodiment of this application, the determining subunit is specifically configured to: under the condition that the battery with the smallest SOC in the N batteries has not been connected in parallel to the battery system, determine whether the difference between the voltage of the third battery and the voltage of the fourth battery is greater than a second threshold; and under a condition that the difference between the voltage of the third battery and the voltage of the fourth battery is greater than the second threshold, determine not to connect the third battery in parallel to the battery system.

Optionally, in this embodiment of this application, the determining subunit is specifically configured to: under the condition that the difference between the voltage of the third battery and the voltage of the fourth battery is greater than the second threshold, determine not to connect (M-1) batteries of the M batteries other than the third battery in parallel to the battery system, where M is greater than 1.

Optionally, in this embodiment of this application, the control unit further includes: a control subunit configured to control the battery system to be applied with high voltage.

Optionally, in this embodiment of this application, the determining unit is further configured to: before it is determined whether the battery with the smallest SOC in the N batteries has been connected in parallel to the battery system, determine whether a voltage of a fifth battery in L batteries, not yet connected in parallel to the battery system, of the N batteries is less than a voltage of a sixth battery in Q batteries already connected in parallel to the battery system; and determine, under a condition that the voltage of the fifth battery is less than the voltage of the sixth battery, whether to connect the fifth battery in parallel to the battery system; where the fifth battery is any one of the L batteries, the sixth battery is a battery with a smallest voltage in the Q batteries, L and Q are positive integers, and N=L+Q, L being greater than or equal to M.

Optionally, in this embodiment of this application, the determining unit is specifically configured to: under the condition that the voltage of the fifth battery is less than the voltage of the sixth battery, determine whether the difference between the voltage of the fifth battery and the voltage of the sixth battery is greater than a second threshold; and under a condition that the difference between the voltage of the fifth battery and the voltage of the sixth battery is not greater than the second threshold, determine to connect the fifth battery in parallel to the battery system.

Optionally, in this embodiment of this application, the fifth battery is a battery with a smallest voltage in the L batteries.

Optionally, in this embodiment of this application, the charging control apparatus is applied to the battery system that has been applied with high voltage.

Optionally, in this embodiment of this application, the control unit further includes: a control subunit configured to: under the condition that the battery with the smallest SOC in the N batteries has been connected in parallel to the battery system, perform power-reduction control charging on the K batteries based on the difference between the SOC of the first battery and the SOC of the second battery. The determining subunit is specifically configured to: under a condition that power-reduction control charging is performed on the K batteries, determine whether to connect the first battery in parallel to the battery system.

Optionally, in this embodiment of this application, the determining subunit is specifically configured to: determine, based on a difference between a voltage of the K batteries and the voltage of the first battery, whether to connect the first battery in parallel to the battery system, under the condition that power-reduction control charging is performed on the K batteries.

Optionally, in this embodiment of this application, the determining subunit is specifically configured to: under the condition that power-reduction control charging is performed on the K batteries, determine whether the difference between the voltage of the K batteries and the voltage of the first battery is greater than a second threshold; and under a condition that the difference between the voltage of the K batteries and the voltage of the first battery is not greater than the second threshold, determine to connect the first battery in parallel to the battery system.

Optionally, in this embodiment of this application, the determining subunit is specifically configured to: under the condition that power-reduction control charging is performed on the K batteries, determine whether the difference between the voltage of the K batteries and the voltage of the first battery is greater than a second threshold; and under a condition that the difference of the voltage of the K batteries minus the voltage of the first battery is greater than the second threshold, determine not to connect the first battery in parallel to the battery system.

Optionally, in this embodiment of this application, the control subunit is specifically configured to: perform power-reduction control charging on the K batteries under a condition that the difference between the SOC of the first battery and the SOC of the second battery is not greater than a first threshold.

Optionally, in this embodiment of this application, the control subunit is specifically configured to: under a condition that the difference between the SOC of the first battery and the SOC of the second battery is greater than a first threshold, perform power-reduction control charging on the K batteries based on a difference between an open circuit voltage OCV corresponding to the voltage of the K batteries and the voltage of the first battery.

Optionally, in this embodiment of this application, the control subunit is specifically configured to: perform power-reduction control charging on the K batteries under a condition that a difference of the open circuit voltage OCV minus the voltage of the first battery is greater than or equal to a third threshold.

Optionally, in this embodiment of this application, the determining subunit is further configured to: under the condition that power-reduction control charging is performed on the K batteries, determine whether a difference of the voltage of the first battery minus the voltage of the K batteries from is greater than the second threshold; and a request subunit configured to: under a condition that the difference of the voltage of the first battery minus the voltage of the K batteries from is greater than the second threshold, request to charge the K batteries based on a value in a charge current look-up table for the K batteries.

Optionally, in this embodiment of this application, the determining subunit is specifically configured to: under the condition that power-reduction control charging is performed on the K batteries, determine whether a first sampling current of the K batteries is greater than a fourth threshold; and under a condition that the first sampling current of the K batteries is not greater than the fourth threshold, determine, based on the difference between the voltage of the K batteries and the voltage of the first battery, whether to connect the first battery in parallel to the battery system.

Optionally, in this embodiment of this application, the control subunit is further configured to: perform power-reduction control charging on the K batteries under a condition that a second sampling current of the K batteries is greater than the fourth threshold.

Optionally, in this embodiment of this application, the voltage of the K batteries is a maximum voltage in K voltages of the K batteries.

Optionally, in this embodiment of this application, the determining subunit is specifically configured to: under the condition that the battery with the smallest SOC in the N batteries has not been connected in parallel to the battery system, perform power-reduction control charging on the K batteries based on the difference between the voltage of the third battery and the voltage of the fourth battery; and determine, under a condition that power-reduction control charging is performed on the K batteries, whether to connect the third battery in parallel to the battery system.

Optionally, in this embodiment of this application, the determining subunit is specifically configured to: determine, based on a difference between a voltage of the K batteries and the voltage of the third battery, whether to connect the third battery in parallel to the battery system, under the condition that power-reduction control charging is performed on the K batteries.

Optionally, in this embodiment of this application, the control subunit is specifically configured to: perform power-reduction control charging on the K batteries under a condition that the difference between the voltage of the third battery and the voltage of the fourth battery is within a predetermined range.

Optionally, in this embodiment of this application, the determining subunit is specifically configured to: under a condition that the difference between the voltage of the third battery and the voltage of the fourth battery is within the predetermined range, determine to connect the third battery in parallel to the battery system.

Optionally, in this embodiment of this application, the third battery is a battery with a smallest voltage in the M batteries.

It should be understood that the above and other operations and/or functions of the various modules in the charging control apparatus 600 are intended to implement the corresponding processes in the respective methods of FIG. 3 to FIG. 5. Details are not repeated herein for brevity.

FIG. 7 is a schematic block diagram of a charging control apparatus 700 according to an embodiment of this application. As shown in FIG. 7, the charging control apparatus 700 includes a processor 710 and a memory 720, where the memory 720 is configured to store instructions, and the processor 710 is configured to read the instructions and execute, based on the instructions, the method in the foregoing embodiments of this application.

The memory 720 may be a separate component independent of the processor 710 or may be integrated in the processor 710.

Optionally, as shown in FIG. 7, the charging control apparatus 700 may also include a transceiver 730, and the processor 710 may control the transceiver 730 to communicate with other devices. Specifically, information or data may be sent to other devices or information or data may be received from other devices.

An embodiment of this application further provides a computer-readable storage medium configured to store a computer program, and the computer program is used to perform the method of all the foregoing embodiments of this application.

It should be understood that the processor in this embodiment of this application may be an integrated circuit chip with a signal processing capability. During implementation, the steps of the foregoing method embodiments may be implemented by using a hardware integrated logic circuit in the processor, or by using instructions in a form of software. The foregoing processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor can implement or execute methods, steps, and logical block diagrams disclosed in the embodiments of this application. The general-purpose processor may be a microprocessor, or the processor may also be any conventional processor or the like. The steps of the methods disclosed with reference to the embodiments of the application may be directly implemented by a hardware decoding processor, or may be implemented by a combination of hardware and a software module in a decoding processor. The software module may be located in a storage medium that is mature in the art, such as a random access memory, a flash memory, a read-only memory, a programmable read-only memory, or an electrically erasable programmable memory, or a register. The storage medium is located in the memory. The processor reads information in the memory and completes the steps of the foregoing method with reference to hardware of the processor.

It can be understood that the memory in this embodiment of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and serves as an external cache. Through illustrative but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and method described in this specification is intended to include but is not limited to these and any other suitable types of memories.

An embodiment of this application further provides a computer-readable storage medium for storing a computer program.

Optionally, the computer-readable storage medium can be applied to the charging control apparatus in the embodiments of this application, and the computer program causes a computer to perform the corresponding processes implemented by the charging control apparatus in the methods of the embodiments of this application. For brevity, details are not described herein.

An embodiment of this application further provides a computer program product including computer program instructions.

Optionally, the computer program product can be applied to the charging control apparatus in the embodiments of this application, and the computer program instructions cause a computer to perform the corresponding processes implemented by the charging control apparatus in the methods of the embodiments of this application. For brevity, details are not described herein.

An embodiment of this application further provides a computer program.

Optionally, the computer program can be applied to the charging control apparatus in the embodiments of this application, and the computer program being running on a computer causes a computer to perform the corresponding processes implemented by the charging control apparatus in the methods of the embodiments of this application. For brevity, details are not described herein.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separated. A component displayed as a unit may be one or more physical units, and may be located in one place, or may be distributed in a plurality of network elements. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of this application. The foregoing storage medium includes: any medium that can store program code, such as a USB flash drive, a removable hard disk, a ROM, a RAM, a magnetic disk, or an optical disc.

The foregoing descriptions are merely specific embodiments of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A charging control method for battery system, **characterized in that** the battery system comprises N batteries, N being a positive integer greater than 1, and the charging control method comprises:
performing charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system, wherein the first battery is any one of the M batteries, and the second battery is a battery with a smallest SOC in the K batteries; or
performing charging control on the battery system based on a difference between a voltage of a third battery in the M batteries and a voltage of a fourth battery in the K batteries, under a condition that the battery with the smallest SOC in the N batteries has not been connected in parallel to the battery system, wherein the third battery is any one of the M batteries and the fourth battery is a battery with a smallest voltage in the K batteries;
wherein both M and K are positive integers and N=M+K.

2. The charging control method according to claim 1, **characterized in that** the performing charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system comprises:
determining, based on the difference between the SOC of the first battery and the SOC of the second battery, whether to connect the first battery in parallel to the battery system, under the condition that the battery with the smallest SOC in the N batteries has been connected in parallel to the battery system;
or
the performing charging control on the battery system based on a difference between a voltage of a third battery in the M batteries and a voltage of a fourth battery in the K batteries, under a condition that the battery with the smallest SOC in the N batteries has not been connected in parallel to the battery system comprises:
determining, based on the difference between the voltage of the third battery and the voltage of the fourth battery, whether to connect the third battery in parallel to the battery system, under the condition that the battery with the smallest SOC in the N batteries has not been connected in parallel to the battery system.

3. The charging control method according to claim 2, **characterized in that** the charging control method is applied to the battery system that has not been applied with high voltage, and the charging control method further comprises:
under a condition that a battery with a smallest voltage in the N batteries has been connected in parallel to the battery system, determining whether the battery with the smallest SOC in the N batteries has been connected in parallel to the battery system.

4. The charging control method according to claim 3, **characterized in that** the determining, based on the difference between the SOC of the first battery and the SOC of the second battery, whether to connect the first battery in parallel to the battery system, under the condition that the battery with the smallest SOC in the N batteries has been connected in parallel to the battery system comprises:
determining whether the difference between the SOC of the first battery and the SOC of the second battery is greater than a first threshold, under the condition that the battery with the smallest SOC in the N batteries has been connected in parallel to the battery system; and
determining, based on a difference between a voltage of the first battery and the voltage of the fourth battery, whether to connect the first battery in parallel to the battery system, under a condition that the difference between the SOC of the first battery and the SOC of the second battery is not greater than the first threshold.

5. The charging control method according to claim 4, **characterized in that** the determining, based on a difference between a voltage of the first battery and the voltage of the fourth battery, whether to connect the first battery in parallel to the battery system, under a condition that the difference between the SOC of the first battery and the SOC of the second battery is not greater than the first threshold comprises:
under a condition that the difference between the SOC of the first battery and the SOC of the second battery is not greater than the first threshold, determining whether the difference between the voltage of the first battery and the voltage of the fourth battery is greater than a second threshold; and
under a condition that the difference between the voltage of the first battery and the voltage of the fourth battery is not greater than the second threshold, determining to connect the first battery in parallel to the battery system.

6. The charging control method according to claim 4, **characterized in that** the determining, based on a difference between a voltage of the first battery and the voltage of the fourth battery, whether to connect the first battery in parallel to the battery system, under a condition that the difference between the SOC of the first battery and the SOC of the second battery is not greater than the first threshold comprises:
under a condition that the difference between the SOC of the first battery and the SOC of the second battery is not greater than the first threshold, determining whether the difference between the voltage of the first battery and the voltage of the fourth battery is greater than a second threshold; and
under a condition that the difference between the voltage of the first battery and the voltage of the fourth battery is greater than the second threshold, determining not to connect the first battery in parallel to the battery system.

7. The charging control method according to claim 3, **characterized in that** the determining, based on the difference between the SOC of the first battery in the M batteries, not yet connected in parallel to the battery system, of the N batteries and the SOC of the second battery in the K batteries already connected in parallel to the battery system, whether to connect the first battery in parallel to the battery system, under the condition that the battery with the smallest SOC in the N batteries has been connected in parallel to the battery system further comprises:
under the condition that the battery with the smallest SOC in the N batteries has been connected in parallel to the battery system, determining whether the difference between the SOC of the first battery and the SOC of the second battery is greater than a first threshold; and
under a condition that the difference between the SOC of the first battery and the SOC of the second battery is greater than the first threshold, determining not to connect the first battery in parallel to the battery system.

8. The charging control method according to claim 7, **characterized in that** the first battery is a battery with a smallest SOC in the M batteries, and the performing charging control on the battery system further comprises:
under a condition that the difference between the SOC of the first battery and the SOC of the second battery is greater than the first threshold, determining not to connect (M-1) batteries of the M batteries other than the first battery in parallel to the battery system, wherein M is greater than 1.

9. The charging control method according to claim 3, **characterized in that** the determining, based on the difference between the voltage of the third battery in the M batteries and the voltage of the fourth battery, whether to connect the third battery in parallel to the battery system, under the condition that the battery with the smallest SOC in the N batteries has not been connected in parallel to the battery system comprises:
under the condition that the battery with the smallest SOC in the N batteries has not been connected in parallel to the battery system, determining whether the difference between the voltage of the third battery and the voltage of the fourth battery is greater than a second threshold; and
under a condition that the difference between the voltage of the third battery and the voltage of the fourth battery is not greater than the second threshold, determining to connect the third battery in parallel to the battery system.

10. The charging control method according to claim 3, **characterized in that** the determining, based on the difference between the voltage of the third battery in the M batteries and the voltage of the fourth battery, whether to connect the third battery in parallel to the battery system, under the condition that the battery with the smallest SOC in the N batteries has not been connected in parallel to the battery system comprises:
under the condition that the battery with the smallest SOC in the N batteries has not been connected in parallel to the battery system, determining whether the difference between the voltage of the third battery and the voltage of the fourth battery is greater than a second threshold; and
under a condition that the difference between the voltage of the third battery and the voltage of the fourth battery is greater than the second threshold, determining not to connect the third battery in parallel to the battery system.

11. The charging control method according to claim 10, **characterized in that** the third battery is a battery with a smallest voltage in the M batteries, and the performing charging control on the battery system further comprises:
under the condition that the difference between the voltage of the third battery and the voltage of the fourth battery is greater than the second threshold, determining not to connect (M-1) batteries of the M batteries other than the third battery in parallel to the battery system, wherein M is greater than 1.

12. The charging control method according to claim 8 or 11, **characterized in that** the performing charging control on the battery system further comprises:
controlling the battery system to be applied with high voltage.

13. The charging control method according to any one of claims 3 to 12, **characterized in that**, before it is determined whether the battery with the smallest SOC in the N batteries has been connected in parallel to the battery system, the charging control method further comprises:
determining whether a voltage of a fifth battery in L batteries, not yet connected in parallel to the battery system, of the N batteries is less than a voltage of a sixth battery in Q batteries already connected in parallel to the battery system; and
determining, under a condition that the voltage of the fifth battery is less than the voltage of the sixth battery, whether to connect the fifth battery in parallel to the battery system;
wherein the fifth battery is any one of the L batteries, the sixth battery is a battery with a smallest voltage in the Q batteries, L and Q are positive integers, and N=L+Q, L being greater than or equal to M.

14. The charging control method according to claim 13, **characterized in that** the determining, under a condition that the voltage of the fifth battery is less than the voltage of the sixth battery, whether to connect the fifth battery in parallel to the battery system comprises:
under the condition that the voltage of the fifth battery is less than the voltage of the sixth battery, determining whether the difference between the voltage of the fifth battery and the voltage of the sixth battery is greater than a second threshold; and
under a condition that the difference between the voltage of the fifth battery and the voltage of the sixth battery is not greater than the second threshold, determining to connect the fifth battery in parallel to the battery system.

15. The charging control method according to claim 13 or 14, **characterized in that** the fifth battery is a battery with a smallest voltage in the L batteries.

16. The charging control method according to claim 2, **characterized in that** the charging control method is applied to the battery system that has been applied with high voltage.

17. The charging control method according to claim 16, **characterized in that** the determining, based on the difference between the SOC of the first battery in the M batteries, not yet connected in parallel to the battery system, of the N batteries and the SOC of the second battery in the K batteries already connected in parallel to the battery system, whether to connect the first battery in parallel to the battery system, under the condition that the battery with the smallest SOC in the N batteries has been connected in parallel to the battery system comprises:
under the condition that the battery with the smallest SOC in the N batteries has been connected in parallel to the battery system, performing power-reduction control charging on the K batteries based on the difference between the SOC of the first battery and the SOC of the second battery; and
determining, under a condition that power-reduction control charging is performed on the K batteries, whether to connect the first battery in parallel to the battery system.

18. The charging control method according to claim 17, **characterized in that** the determining, under a condition that power-reduction control charging is performed on the K batteries, whether to connect the first battery in parallel to the battery system comprises:
determining, based on a difference between a voltage of the K batteries and the voltage of the first battery, whether to connect the first battery in parallel to the battery system, under the condition that power-reduction control charging is performed on the K batteries.

19. The charging control method according to claim 18, **characterized in that** the determining, based on a difference between a voltage of the K batteries and the voltage of the first battery, whether to connect the first battery in parallel to the battery system, under the condition that power-reduction control charging is performed on the K batteries comprises:
under the condition that power-reduction control charging is performed on the K batteries, determining whether the difference between the voltage of the K batteries and the voltage of the first battery is greater than a second threshold; and
under a condition that the difference between the voltage of the K batteries and the voltage of the first battery is not greater than the second threshold, determining to connect the first battery in parallel to the battery system.

20. The charging control method according to claim 18, **characterized in that** the determining, based on a difference between a voltage of the K batteries and the voltage of the first battery, whether to connect the first battery in parallel to the battery system, under the condition that power-reduction control charging is performed on the K batteries comprises:
under the condition that power-reduction control charging is performed on the K batteries, determining whether the difference between the voltage of the K batteries and the voltage of the first battery is greater than a second threshold; and
under a condition that a difference of the voltage of the K batteries minus the voltage of the first battery is greater than the second threshold, determining not to connect the first battery in parallel to the battery system.

21. The charging control method according to any one of claims 17 to 20, **characterized in that** the performing power-reduction control charging on the K batteries based on the difference between the SOC of the first battery and the SOC of the second battery comprises:
performing power-reduction control charging on the K batteries under a condition that the difference between the SOC of the first battery and the SOC of the second battery is not greater than a first threshold.

22. The charging control method according to any one of claims 17 to 20, **characterized in that** the performing power-reduction control charging on the K batteries based on the difference between the SOC of the first battery and the SOC of the second battery comprises:
under a condition that the difference between the SOC of the first battery and the SOC of the second battery is greater than a first threshold, performing power-reduction control charging on the K batteries based on a difference between an open circuit voltage OCV corresponding to the voltage of the K batteries and the voltage of the first battery.

23. The charging control method according to claim 22, **characterized in that** the performing power-reduction control charging on the K batteries based on a difference between an open circuit voltage OCV corresponding to the voltage of the K batteries and the voltage of the first battery comprises:
performing power-reduction control charging on the K batteries under a condition that a difference of the open circuit voltage OCV minus the voltage of the first battery is greater than or equal to a third threshold.

24. The charging control method according to any one of claims 17 to 23, **characterized in that** the performing charging control on the battery system further comprises:
under the condition that power-reduction control charging is performed on the K batteries, determining whether a difference of the voltage of the first battery minus the voltage of the K batteries from is greater than the second threshold; and
under a condition that the difference of the voltage of the first battery minus the voltage of the K batteries from is greater than the second threshold, requesting to charge the K batteries based on a value in a charge current look-up table for the K batteries.

25. The charging control method according to any one of claims 17 to 24, **characterized in that** the determining, based on a difference between a voltage of the K batteries and the voltage of the first battery, whether to connect the first battery in parallel to the battery system, under the condition that power-reduction control charging is performed on the K batteries comprises:
under the condition that power-reduction control charging is performed on the K batteries, determining whether a first sampling current of the K batteries is greater than a fourth threshold; and
under a condition that the first sampling current of the K batteries is not greater than the fourth threshold, determining, based on the difference between the voltage of the K batteries and the voltage of the first battery, whether to connect the first battery in parallel to the battery system.

26. The charging control method according to any one of claims 17 to 25, **characterized in that** the performing power-reduction control charging on the K batteries further comprises:
performing power-reduction control charging on the K batteries under a condition that a second sampling current of the K batteries is greater than the fourth threshold.

27. The charging control method according to any one of claims 17 to 26, **characterized in that** the voltage of the K batteries is a maximum voltage in K voltages of the K batteries.

28. The charging control method according to claim 16, **characterized in that** the determining, based on the difference between the voltage of the third battery in the M batteries and the voltage of the fourth battery in the K batteries, whether to connect the third battery in parallel to the battery system, under the condition that the battery with the smallest SOC in the N batteries has not been connected in parallel to the battery system comprises:
under the condition that the battery with the smallest SOC in the N batteries has not been connected in parallel to the battery system, performing power-reduction control charging on the K batteries based on the difference between the voltage of the third battery and the voltage of the fourth battery; and
determining, under a condition that power-reduction control charging is performed on the K batteries, whether to connect the third battery in parallel to the battery system.

29. The charging control method according to claim 28, **characterized in that** the determining, under a condition that power-reduction control charging is performed on the K batteries, whether to connect the third battery in parallel to the battery system comprises:
under the condition that power-reduction control charging is performed on the K batteries, determining, based on a difference between a voltage of the K batteries and the voltage of the third battery, whether to connect the third battery in parallel to the battery system.

30. The charging control method according to claim 29, **characterized in that** the performing power-reduction control charging on the K batteries based on the difference between the voltage of the third battery and the voltage of the fourth battery comprises:
performing power-reduction control charging on the K batteries under a condition that the difference between the voltage of the third battery and the voltage of the fourth battery is within a predetermined range.

31. The charging control method according to claim 29 or 30, **characterized in that** the determining, based on a difference between a voltage of the K batteries and the voltage of the third battery, whether to connect the third battery in parallel to the battery system comprises:
under a condition that the difference between the voltage of the third battery and the voltage of the fourth battery is within the predetermined range, determining to connect the third battery in parallel to the battery system.

32. The charging control method according to any one of claims 28 to 31, **characterized in that** the third battery is a battery with a smallest voltage in the M batteries.

33. A charging control apparatus for battery system, **characterized in that** the battery system comprises N batteries, N being a positive integer greater than 1, and the charging control apparatus comprises:
a control unit configured to: perform charging control on the battery system based on a difference between a SOC of a first battery in M batteries, not yet connected in parallel to the battery system, of the N batteries and a SOC of a second battery in K batteries already connected in parallel to the battery system, under a condition that a battery with a smallest SOC in the N batteries has been connected in parallel to the battery system, wherein the first battery is any one of the M batteries, and the second battery is a battery with a smallest SOC in the K batteries; or
perform charging control on the battery system based on a difference between a voltage of a third battery in the M batteries and a voltage of a fourth battery in the K batteries, under a condition that the battery with the smallest SOC in the N batteries has not been connected in parallel to the battery system, wherein the third battery is any one of the M batteries and the fourth battery is a battery with a smallest voltage in the K batteries;
wherein both M and K are positive integers and N=M+K.

34. A charging control apparatus for battery system, **characterized in that** the battery system comprises N batteries, N being a positive integer greater than 1; and the charging control apparatus comprises a memory and a processor, wherein the memory is configured to store instructions, and the processor is configured to read the instructions and execute, based on the instructions, the method according to any one of claims 1 to 32.

35. A chip, **characterized by** comprising: a processor configured to invoke a computer program from a memory and run the computer program, so that a device equipped with the chip performs the method according to any one of claims 1 to 32.

36. A computer program, **characterized in that** the computer program causes a computer to perform the method according to any one of claims 1 to 32.

37. A computer-readable storage medium, **characterized in that** the computer program is stored therein, and the computer program causes a computer to perform the method according to any one of claims 1 to 32.

38. A computer program product, **characterized by** comprising computer program instructions, and the computer program instructions causes a computer to perform the method according to any one of claims 1 to 32.
